(19) Europäisches Patentamt
European Patent Office
Office européen des brevets

(11) **EP 1 863 870 B1**

(12) **EUROPEAN PATENT SPECIFICATION**

(45) Date of publication and mention
of the grant of the patent:
**22.12.2010 Bulletin 2010/51**

(51) Int Cl.:
**C08K 3/14** (2006.01)   **C08K 3/28** (2006.01)
**C08K 3/38** (2006.01)   **C08L 67/00** (2006.01)

(21) Application number: **06738721.7**

(22) Date of filing: **17.03.2006**

(86) International application number:
**PCT/US2006/009692**

(87) International publication number:
**WO 2006/104724 (05.10.2006 Gazette 2006/40)**

(54) **POLYESTER POLYMER AND COPOLYMER COMPOSITIONS CONTAINING PARTICLES OF ONE OR MORE TRANSITION METAL COMPOUNDS**

POLYESTERPOLYMER- UND COPOLYMERZUSAMMENSETZUNGEN MIT PARTIKELN AUS EINER ODER MEHREREN ÜBERGANGSMETALLVERBINDUNGEN

COMPOSITIONS DE POLYMERES ET DE COPOLYMERES DE POLYESTER CONTENANT DES PARTICULES D'UN OU DE PLUSIEURS COMPOSES DE METAUX DE TRANSITION

(84) Designated Contracting States:
**AT BE BG CH CY CZ DE DK EE ES FI FR GB GR HU IE IS IT LI LT LU LV MC NL PL PT RO SE SI SK TR**

(30) Priority: **31.03.2005 US 95834**

(43) Date of publication of application:
**12.12.2007 Bulletin 2007/50**

(73) Proprietor: **EASTMAN CHEMICAL COMPANY
Kingsport TN 37660 (US)**

(72) Inventors:
• **HOWELL, Earl Edmondson Jr.
Kingsport, Tennessee 37664 (US)**

• **QUILLEN, Donna, Rice
Kingsport, Tennessee 37660 (US)**

(74) Representative: **Wibbelmann, Jobst et al
Wuesthoff & Wuesthoff
Patent- und Rechtsanwälte
Schweigerstrasse 2
81541 München (DE)**

(56) References cited:
EP-A- 1 431 337      WO-A-01/46306
WO-A-95/02504       WO-A-96/03163
WO-A-2005/075550    WO-A-2006/055198
US-A- 6 022 920      US-A- 6 034 167
US-A1- 2003 054 160

**Description**

FIELD OF THE INVENTION

The invention relates to polyester compositions that are useful in packaging, such as in the manufacture of beverage containers by reheat blow molding or other hot forming processes in which polyester is reheated. The compositions exhibit improved reheat, while exhibiting a pleasing visual appearance, through good clarity and color.

BACKGROUND OF THE INVENTION

Many plastic packages, such as those made from poly(ethylene terephthalate) (PET) and used in beverage containers, are formed by reheat blow-molding, or other operations that require heat softening of the polymer.

In reheat blow-molding, bottle preforms, which are test-tube shaped extrusion moldings, are heated above the glass transition temperature of the polymer, and then positioned in a bottle mold to receive pressurized air through their open end. This technology is well known in the art, as shown, for example in U.S. Pat. No. 3,733,309. In a typical blow-molding operation, radiation energy from quartz infrared heaters is generally used to reheat the preforms.

In the preparation of packaging containers using operations that require heat softening of the polymer, the reheat time, or the time required for the preform to reach the proper temperature for stretch blow molding (also called the heat-up time), affects both the productivity and the energy required. As processing equipment has improved, it has become possible to produce more units per unit time. Thus it is desirable to provide polyester compositions which provide improved reheat properties, by reheating faster (increased reheat rate), or with less reheat energy (increased reheat efficiency), or both, compared to conventional polyester compositions.

The aforementioned reheat properties vary with the absorption characteristics of the polymer itself. Heat lamps used for reheating polymer preforms are typically infrared heaters, such as quartz infrared lamps, having a broad light emission spectrum, with wavelengths ranging from about 500 nm to greater than 1,500 nm. However, polyesters, especially PET, absorb poorly in the region from 500 nm to 1,500 nm. Thus, in order to maximize energy absorption from the lamps and increase the preform's reheat rate, materials that will increase infrared energy absorption are sometimes added to PET. Unfortunately, these materials tend to have a negative effect on the visual appearance of PET containers, for example increasing the haze level and/or causing the article to have a dark appearance. Further, since compounds with absorbance in the range of 400-700 nm appear colored to the human eye, materials that absorb in this wavelength range will impart color to the polymer.

A variety of black and gray body absorbing compounds have been used as reheat agents to improve the reheat characteristics of polyester preforms under reheat lamps. These reheat additives include carbon black, graphite, antimony metal, black iron oxide, red iron oxide, inert iron compounds, spinel pigments, and infrared absorbing dyes. The amount of absorbing compound that can be added to a polymer is limited by its impact on the visual properties of the polymer, such as brightness, which may be expressed as an L* value, and color, which is measured and expressed as an a* value and a b* value, as further described below.

To retain an acceptable level of brightness and color in the preform and resulting blown articles, the quantity of reheat additive may be decreased, which in turn decreases reheat rates. Thus, the type and amount of reheat additive added to a polyester resin may be adjusted to strike the desired balance between increasing the reheat rate and retaining acceptable brightness and color levels. It would be ideal to simultaneously increase the reheat rate and decrease the rate at which color and brightness degrade as the concentration of the reheat additive in a thermoplastic composition is increased.

A further disadvantage of some conventional reheat additives known in the art is their instability during the PET manufacturing process. For example, antimony metal is known to re-oxidize to antimony oxide (which is ineffective at increasing reheat rate) if there are oxygen leaks in the melt-phase or solid-stating manufacturing processes. This results in variability in the heat-up rates of preforms in the reheat blow molding process and thus requires constant adjustments of the infrared lamp settings.

WO 2007/064312 (not pre-published) discloses polyester polymer and copolymer compositions containing titanium nitride particles.

WO 2006/055198 (not pre-published) relates to polyester polymer and copolymer compositions containing titanium carbide particles.

The disclosure of the above cited International application documents is not claimed in this patent.

EP 1 431 337 A1 discloses polyether pellet compositions, preforms and bottles, each comprising a polyester polymer and silicon carbide, wherein the polyester or bottle has a low coefficient of static friction and a low bottle sidewall haze.

WO 01/46306 A1 discloses a thermoplastic composition, such as PET, which contains an inert iron compound such as FeP, FeSi, or combinations thereof, having no chemical activity in the PET, with or without certain quantities of elemental metals, such as antimony, and a reducing agent or other stabilizer such as phosphite or phosphoric acid, wherein the inert ion compound is used as reheat agent.

WO 1996/03163 A1 discloses a low friction intravascular catheter component formed of a polyester matrix having incorporated therein a finely divided lubricous particulate which is preferably one or more suitable lubricous particulate selected from the group consisting of graphite, molybdenum, disulfide, TiC, MoC, graphite difluoride, and fluoropolymers.

WO 1995/02504 discloses the use of titanium diboride ($TiB_2$) as a thermally conductive filler in thermally conductive materials. The $TiB_2$ provides improved thermal conductivity in comparison to conventional thermally conductive, electrically insulative or thermally conductive electrically conductive fillers especially at low application pressures. The material into which the $TiB_2$ filler is incorporated includes elastomers, films and tapes.

There remains a need in the art for polyester compositions containing reheat additives that improve reheat without the problems associated with known reheat additives, such as re-oxidation, and inconsistent reheat, while providing improved brightness, clarity, and color.

## SUMMARY OF THE INVENTION

The invention relates to polyester compositions that comprise polyester polymers or copolymers, and especially thermoplastic polyester polymers or copolymers, having incorporated therein particles of one or more transition metal compounds that improve the reheat properties of the compositions. These transition metal compounds are binary compounds of a transition metal element selected from titanium, vanadium, zirconium, niobium, hafnium, and tantalum, and a non-metallic element selected from boron, carbon, and nitrogen. The transition metal compound particles, which may be described hereinafter simply as "particles," may be incorporated in the polyester by melt compounding, or may be added, for example, during the melt-phase portion of the polymerization process. A range of particle sizes may be used, as well as a range of particle size distributions.

The various embodiments of the present invention are set forth in the attached claims in greater detail.

The polyester compositions according to the invention are suitable for use in packaging in which a reheat step is desirable or necessary, and are provided with particles in an amount sufficient to improve the reheat efficiency. These polyester compositions may be provided as a melt, in solid form, as preforms such as for blow molding, as sheets suitable for thermoforming, as concentrates, and as bottles, the compositions comprising a Polyester polymer, with particles of one or more transition metal compounds dispersed in the polyester. Suitable polyesters include polyalkylene terephthalates and polyalkylene naphthalates.

The invention relates also to processes for the manufacture of polyester compositions in which particles of one or more of the transition metal compounds may be added to any stage of a polyester polymerization process, such as during the melt phase for the manufacture of polyester polymers, as further described herein. The particles may also be added to the polyester polymer which is in the form of solid-stated pellets, or to an injection molding machine for the manufacture of preforms from the polyester polymers.

## DETAILED DESCRIPTION OF THE INVENTION

The present invention may be understood more readily by reference to the following detailed description of the invention, and to the examples provided. It is to be understood that this invention is not limited to the specific processes and conditions described, because specific processes and process conditions for processing plastic articles may vary. It is also to be understood that the terminology used is for the purpose of describing particular embodiments only and is not intended to be limiting.

As used in the specification and the claims, the singular forms "a," "an," and "the" include plural referents unless the context clearly dictates otherwise. For example, reference to processing a thermoplastic "preform," "container," or "bottle" is intended to include the processing of a plurality of thermoplastic preforms, articles, containers, or bottles.

By "comprising" or "containing" we mean that at least the named compound, element, particle, etc. must be present in the composition or article, but does not exclude the presence of other compounds, materials, particles, etc., even if the other such compounds, material, particles, etc. have the same function as what is named.

As used herein, a "$d_{50}$ particle size" is the median diameter, where 50% of the volume is composed of particles larger than the stated $d_{50}$ value, and 50% of the volume is composed of particles smaller than the stated $d_{50}$ value. As used herein, the median particle size is the same as the $d_{50}$ particle size.

According to the invention, particles of one or more transition metal compounds are used to improve the reheat properties of the polyester compositions in which they are distributed. The transition metal compounds useful according to the invention are binary compounds of a transition metal element selected from titanium, vanadium, zirconium, niobium, hafnium, and tantalum, and a non-metallic element selected from boron, carbon, and nitrogen. The particles provide polyester compositions having improved reheat properties, providing compositions that reheat faster (increased reheat rate), with less reheat energy (increased reheat efficiency), or to a higher temperature in a given time than would otherwise be achieved, compared to conventional polyester compositions.

In the transition metal compounds just described, the relatively large transition metal atoms are thought to act as a host lattice, with the smaller non-metal atoms occupying interstices of the close-packed metal atoms. In contrast with ionic or covalent compounds, ideal stoichiometry is generally not found in these transition metal compounds. The composition of such compounds is a function of the geometrical packing arrangements, rather than valence bonding. These compounds are generally characterized by great hardness, high melting points, and chemical stability, and are typically metallic in their electrical, magnetic, and optical properties. Some of the transition metal compounds useful according to the claimed invention are further described in "Transition Metal Carbide and Nitrides" by L. E. Toth, Academic Press, 1971, especially pp. 1-28, the relevant portions of which are incorporated herein by reference. The transition metal nitrides are also described in Kirk-Othmer Encyclopedia of Chemical Technology, Vol 17, 4th ed., (1996) pp. 108 -127, and especially pp. 108 -114, the relevant portions of which are incorporated herein by reference. The transition metal carbides are further described in Kirk-Othmer Encyclopedia of Chemical Technology, Vol 4, 4th ed., (1992) pp. 841 - 848, and especially pp. 844 - 847, the relevant portions of which are incorporated herein by reference. The transition metal borides are further described in Kirk-Othmer Encyclopedia of Chemical Technology, Vol 4, 4th ed., (1997) pp. 423 - 430, the relevant portions of which are incorporated herein by reference.

The transition metal compounds of the invention, given with their approximate empirical formulas, thus include the titanium borides ($TiB$, $TiB_2$, $Ti_2B$, $Ti_2B_5$), the vanadium nitrides ($VN$, $V_2N$), the vanadium borides ($VB$, $VB_2$, $V_2B_3$, $V_3B_2$), the vanadium carbides ($VC$, $V_2C$), the zirconium nitrides ($ZrN$, $Zr_3N_4$), the zirconium borides ($ZrB$, $ZrB_2$, $ZrN_{12}$), zirconium carbide ($ZrC$), the niobium nitrides ($NbN$, $Nb_2N$, $Nb_4N_3$, $Nb_3N_6$, $Nb_4N_5$), the niobium borides ($NbB$, $NbB_2$), the niobium carbides ($NbC$, $Nb_2C$), the hafnium nitrides ($HfN$, $Hf_3N_2$, $Hf_4N_3$), the hafnium borides ($HfB$, $HfB_2$), hafnium carbide ($HfC$), the tantalum nitrides ($TaN$, $Ta_2N$, $Ta_3N_5$, $Ta_5N_6$, $Ta_4N_5$), the tantalum borides ($TaB$, $Ta_3B_4$, $Ta_3B_2$), and the tantalum carbides ($TaC$, $Ta_2C$).

In one embodiment, the transition metal compounds comprise one or more of the titanium borides. The most common phase of titanium boride is $TiB_2$, which is a gray crystalline solid with a hexagonal crystal structure. However, titanium boride is stable over a range of anion or cation deficiencies, all of which compounds are intended to fall within the scope of the invention. Indeed, so long as the particles according to the invention predominantly comprise titanium boride, by weight, the remainder of the particles may well be elemental titanium, or titanium with small amounts of boron dissolved, such that the average amount of boron in the particles may, by weight, be even lower than that stated in the empirical formulas.

Titanium boride compounds are further described in Kirk-Othmer Encyclopedia of Chemical Technology, Vol 24, 4th ed., (1997) pp. 225 - 231, the relevant portions of which are incorporated herein by reference.

In yet further embodiments, the transition metal of the transition metal compounds is vanadium. Vanadium is also capable of taking atoms of the non-metals carbon, nitrogen, and boride atoms into its metal lattice structure, to thereby form transition metal compounds of the invention. Not all possible vacant lattice sites need be filled, so that sub-stoichiometric species are possible. For example, the nitrogen content in vanadium nitride can range from $VN_{0.71}$ to $VN_{1.00}$. In vanadium boride, the interstitial boron atoms are linked in a layer of hexagons. Vanadium nitride compounds according to the claimed invention are described in Kirk-Othmer Encyclopedia of Chemical Technology, Vol 24, 4th ed., (1997) p. 801,. Particles of the vanadium compounds may likewise contain amounts of elemental vanadium, as well as the free non-metal, as already described.

Likewise, the nitrides, carbides, and borides of zirconium and tantalum are useful according to the invention, and also exhibit a range of stoichiometries, depending on the number of interstitial vacancies that are filled with the non-metal nitrogen, carbon, or boron atoms. The properties of zirconium nitrides, carbides and borides useful according to the invention are further described in Kirk-Othmer Encyclopedia of Chemical Technology, Vol 25, 4th ed., (1998) pp. 872-873, Tantalum nitride and carbide compounds useful according to the claimed invention are further described in Kirk-Othmer Encyclopedia of Chemical Technology, Vol 23, 4th ed., (1997) p. 676,.

In yet further embodiments, the transition metal of the transition metal compounds may be niobium or hafnium. These transition metals are also capable of taking atoms of the non-metals carbon, nitrogen, and boride into their metal lattice structures, to thereby form the transition metal compounds of the invention. Not all possible vacant lattice sites need be filled, so that sub-stoichiometric species are possible.

The particles of transition metal compounds useful according to the claimed invention may comprise significant amounts of an oxide coating, so long as the transition metal compound particles are comprised predominantly of the transition metal compound itself, and so long as the total amount of transition metal compound is at least 50 wt.%, for example, or at least 60 wt%, or at least 75 wt.%.

The transition metal compound particles useful according to the invention may be distinguished from particles of other compounds that include the transition metal elements titanium, vanadium, zirconium, niobium, hafnium or tantalum, such as those which may be used as condensation catalysts, for example, alkoxides or simple chelates of titanium or zirconium. That is, if titanium, vanadium, zirconium, niobium, hafnium or tantalum compounds are used as condensation catalysts to form the polymer in the compositions of the claimed invention, such polymers will additionally contain particles of the transition metal compounds, as described herein. As already described, the titanium borides useful according to the invention may also be distinguished from elemental titanium and titanium alloys, as further described in Kirk-Othmer Encyclopedia of Chemical Technology, Vol. 24, 4th ed., (1997) pp. 186 - 224, although the invention does not exclude the presence of elemental titanium or titanium alloys in the titanium boride particles, so long as the particles are comprised predominantly of the titanium boride, as already described.

The transition metal compound particles useful according to the invention for the improvement of reheat and color in polyester compositions include those having a range of particle sizes and particle size distributions, although we have found certain particle sizes and relatively narrow particle size distributions to be especially suitable in certain applications, as further described herein.

The particles according to the claimed invention may include one or more other metals or impurities, so long as the particles are comprised predominantly of the transition metal compound, for example in an amount of at least 50 wt.%, or as described elsewhere herein. Metals or non-metals that may be present in minor amounts up to a total of less than 50 wt.% include aluminum, tin, manganese, germanium, iron, chromium, tungsten, molybdenum, palladium, ruthenium, cobalt, nickel, copper, gold, silver, silicon, and hydrogen, as well as oxygen, as already described,

Not wishing to be bound by any theory, we believe that the effectiveness of these transition metal compounds as reheat additives may be a function of the absorptive properties of the compounds, so that the transition metal compound particles of the invention containing minor amounts of other materials are suitable for use according to the invention so long as the particles are predominantly comprised of the transition metal compound. Thus, the particles of the invention may comprise at least 50 wt.% of the transition metal compound, or at least 75 wt.% of the transition metal compound, or at least 90 wt.% of the transition metal compound, or at least 95 wt.% of the transition metal compound.

The particles may thus include the elemental transition metals, and may include other materials, such as other metals, so long as such other materials do not substantially affect the ability of the particles of the transition metal compounds to increase the reheat properties of the polymer compositions.

The particles also may be coated with a fine layer of an oxide coating, and are useful according to the invention so long as the oxide coating does not substantially affect the ability of the transition metal compound particles to increase the reheat efficiency of the polymer compositions.

The particles may likewise be hollow spheres of the transition metal compound or spheres coated with the transition metal compound, in which the core may be comprised of the transition metal compound, of mixtures of the transition metal compound with other materials, or of other materials in the substantial absence of the transition metal compound. Again, not wishing to be bound by any theory, we think it likely that the effectiveness of the transition metal compound particles as reheat additives is a function of the absorptive properties of the transition metal compounds, so that particles coated with the transition metal compounds are suitable for use according to the invention, so long as the coating thickness is sufficient to provide adequate reheat properties. Thus, in various embodiments, the thickness of the coating may be from about 0.005 $\mu$m to about 10 $\mu$m, or from 0.01 $\mu$m to 5 $\mu$m, or from 0.10 $\mu$m to 0.5 $\mu$m. Such transition metal compound coatings may also comprise small amounts of other materials, as already described.

The amount of the particles present in the polyester compositions according to the invention may vary within a wide range, for example from about 0.5 ppm to about 1,000 ppm, or from 1 ppm to 750 ppm, or from 5 ppm to 500 ppm, or from 5 ppm to 250 ppm. The particles may thus be present, for example, in an amount of at least 0.5 ppm, or at least 1 ppm, or at least 5 ppm, up to about 1,000 ppm, or up to about 750 ppm, or up to about 500 ppm, or up to about 250 ppm. Thermoplastic concentrates according to the invention may, of course, have amounts greater than these, as further described elsewhere herein.

We note that particles of the various transition metal compounds useful according to the invention may be produced by various powder metallurgy techniques, such as those described for nitrides and carbides in "Transition Metal Carbides and Nitrides" by L.E. Toth, Academic Press, 1971, p. 12, and for borides in Kirk-Othmer Encyclopedia of Chemical Technology, Vol 4, 4th ed., (1992) p. 426, the relevant portions of each of which are incorporated herein by reference. The transition metal compound particles according to the invention may thus be produced by any known means, without limitation.

In the case of nitrides, the methods include, but are not limited to, the following: (1) nitriding the metal powder or metal hydride with nitrogen or ammonia, (2) nitriding metal oxide powders in the presence of carbon, (3) reaction of metal chlorides with ammonia, and (4) precipitation from the gas phase by reacting the metal halide in a nitrogen/hydrogen atmosphere.

In the case of carbides, the methods include, but are not limited to, the following: (1) direct reaction of the metal powder or metal hydride with carbon in a protected atmosphere or vacuum, (2) direct reaction of the metal oxide and excess carbon in a protective or reducing atmosphere, (3) reaction of the metal with a carburizing gas, and (4) precipitation from the gas phase by reacting the metal halide or metal carbonyl in hydrogen.

In the case of borides, methods include direct combination of boron with the elements at temperatures in the range of 1,100 - 2,000 °C, or by vapor-phase reaction or electrolysis.

The shapes of the transition metal compound particles which can be used in this invention include, but are not limited to, the following: acicular powder, angular powder, dendritic powder, equi-axed powder, flake powder, fragmented powder, granular powder, irregular powder, nodular powder, platelet powder, porous powder, rounded powder, and spherical powder. The particles may be of a filamentary structure, where the individual particles may be loose aggregates of smaller particles attached to form a bead or chain-like structure. The overall size of the particles may be variable, due to a variation in chain length and degree of branching.

The size of the transition metal compound particles may vary within a broad range depending on the method of production, and the numerical values for the particle sizes may vary according to the shape of the particles and the method of measurement. Particle sizes useful according to the invention may be from about 0.001 $\mu$m to about 100 $\mu$m, or from 0.01 $\mu$m to 45 $\mu$m, or from 0.01 $\mu$m to 10 $\mu$m, or from 0.01 $\mu$m to 5 $\mu$m. When the polyester composition comprises PET, we expect that particle sizes from 0.01 $\mu$m to 5 $\mu$m would be especially suitable.

The particles useful according to the invention, which have a mean particle size suitable for the invention, may have irregular shapes and form chain-like structures, although roughly spherical particles may be preferred. The particle size and particle size distribution may be measured by methods such as those described in the Size Measurement of Particles entry of Kirk-Othmer Encyclopedia of Chemical Technology, Vol. 22, 4th ed., (1997) pp. 256 - 278. For example, particle size and particle size distributions may be determined using a Fisher Subsieve Sizer or a Microtrac Particle-Size Analyzer manufactured by Leeds and Northrop Company, or by microscopic techniques, such as scanning electron microscopy or transmission electron microscopy.

A range of particle size distributions may be useful according to the invention. The particle size distribution, as used herein, may be expressed by "span (S)," where S is calculated by the following equation:

$$S = \frac{d_{90} - d_{10}}{d_{50}}$$

where $d_{90}$ represents a particle size in which 90% of the volume is composed of particles smaller than the stated $d_{90}$; and $d_{10}$ represents a particle size in which 10% of the volume is composed of particles smaller than the stated $d_{10}$; and $d_{50}$ represents a particle size in which 50% of the volume is composed of particles larger than the stated $d_{50}$ value, and 50% of the volume is composed of particles smaller than the stated $d_{50}$ value.

Thus, particle size distributions in which the span (S) is from 0 to 50, or from 0 to 5, or from 0.01 to 2, for example, may be used according to the invention.

In order to obtain a good dispersion of the particles in the polyester compositions, a concentrate, containing for example from about 300 ppm to about 10,000 ppm of the particles, may be prepared using a polyester such as a commercial grade of PET. The concentrate may then be let down into a polyester at the desired concentration, ranging, for example, from 1 ppm to 750 ppm.

Due to the properties of the transition metal compounds of the invention, we expect that polyester compositions of this invention which contain these particles as a reheat additive will not suffer from the problem of re-oxidation in the presence of an oxygen leak during solid-stating, as is the case with antimony metal particles. Thus, we expect that the reheat rate will tend to be less variable with such particles, and fewer adjustments will need to be made to the lamp settings during the reheat blow molding process.

The amount of particles used in the polyester will depend upon the particular application, the desired reduction in reheat time, and the toleration level in the reduction of a* and b* away from zero along with the movement of L* brightness values away from 100. Thus, in various embodiments, the quantity of particles may be at least 0.5 ppm, or at least 1 ppm, or at least 5 ppm, or at least 10 ppm. In many applications, the quantity of the particles may be up to about 250 ppm, or up to about 500 ppm, or even up to about 750 ppm, or up to 1,000 ppm. The maximum amount of these particles may be limited by one or more of the desired reheat rate, or maintenance in L*, a*, b* and other color properties, which may vary among applications or customer requirements. In those applications where color, haze, and brightness are not important features to the application, however, the amount of particles used may be up to 1,000 ppm, or up to 5,000 ppm, or even up to 10,000 ppm. The amount can even exceed 10,000 ppm when formulating a concentrate, as discussed elsewhere herein.

The method by which the particles are incorporated into the polyester composition is not limited. The particles can be added to the polymer reactant system, during or after polymerization, to the polymer melt, or to the molding powder or pellets or molten polyester in the injection-molding machine from which bottle preforms are made. They may be added at locations including, but not limited to, proximate the inlet to the esterification reactor, proximate the outlet of the esterification reactor, at a point between the inlet and the outlet of the esterification reactor, anywhere along the recirculation loop, proximate the inlet to the prepolymer reactor, proximate the outlet to the prepolymer reactor, at a point between the inlet and the outlet of the prepolymer reactor, proximate the inlet to the polycondensation reactor, or at a point between the inlet and the outlet of the polycondensation reactor.

The particles may also be added to a polyester polymer, such as PET, and fed to an injection molding machine by any method, including feeding the particles to the molten polymer in the injection molding machine, or by combining the particles with a feed of PET to the injection molding machine, either by melt blending or by dry blending pellets. In each of these cases, the particles may be combined with PET or its precursors neat, as a concentrate containing PET, or diluted with a carrier. The carrier may be reactive to PET or may be non-reactive, as further described herein.

Alternatively, the particles may be added to an esterification reactor, to a prepolymer reactor, to a polycondensation reactor, or to solid pellets in a reactor for solid stating, or at any point in-between any of these stages. In each of these cases also, the particles may be combined with PET or its precursors neat, as a concentrate containing PET, or diluted with a carrier. The carrier may be reactive to PET or may be non-reactive.

Suitable carriers for introducing the particles into the polymerization process, or otherwise introduced into the polymers in which they are incorporated, may be liquids or solids, and include, but are not limited to, fatty acid esters, ethoxylated fatty acid esters, paraffin oils, polyvalent alcohols, polyvalent amines, silicone oil, hydrogenated castor oil, hydrogenated ricinus oil, stearic esters of pentaerythritol, soybean oil, and ethoxylated alcohols such as polyethylene glycol of various molecular weights provided as a liquid or solid.

The particles, whether neat or in a concentrate or in a carrier, and the bulk polyester, may be dried prior to mixing together. These may be dried in an atmosphere of dried air or other inert gas, such as nitrogen, and if desired, under sub-atmospheric pressure.

The impact of a reheat additive on the color of the polymer can be judged using a tristimulus color scale, such as the CIE L*a*b* scale. The L* value ranges from 0 to 100 and measures dark to light. The a* value measures red to green with positive values being red and negative values green. The b* value measures yellow to blue with yellow having positive values and blue negative values.

Color measurement theory and practice are discussed in greater detail in Principles of Color Technology, pp. 25-66 by Fred W. Billmeyer, Jr., John Wiley & Sons, New York (1981).

Suitable L* values for polyester compositions to be used in preparing twenty-ounce bottle preforms should generally be greater than 60, more preferably at least 65, and more preferably yet at least 70. Specifying a particular preform L* brightness does not imply that a preform having a particular sidewall cross-sectional thickness was actually made and measured, but only that the polyester compositions as disclosed herein may be used to form preforms having the L* values given, and that the L* values given are based on a preform having a thickness of 3.912 mm [0.514 inches] Similarly, the color of desirable polyester compositions in the form of twenty-ounce bottle preforms having a nominal sidewall cross-sectional thickness of 3.912mm [0.154 inches] expressed as an a* coordinate value, preferably ranges from about minus 2.0 to about plus 0.5, or from about minus 2.0 to about plus 0.1. With respect to a b* coordinate value, it is generally desired to make a bottle preform having a b* value coordinate ranging from minus 3.0, or from minus 1.5, to a positive value of less than plus 5.0, or less than plus 4.0, or less than plus 3.8, or less than 2.6.

The measurements of L*, a* and b* color values as used herein are conducted according to the following method. The instrument used for measuring color should have the capabilities of a HunterLab UltraScan XE using the CIE Lab Scale (L*, a*, b*), D65 (ASTM) illuminant, 10° observer and an integrating sphere geometry. Clear plaques, films, preforms, and bottles, are tested in the transmission mode under ASTM D1746 "Standard Test Method for Transparency of Plastic Sheeting." The instrument for measuring color is set up under ASTM E1164 "Standard Practice for Obtaining Spectrophotometric Data for Object-Color Evaluation."

The following test methods may be used when the sample is a preform or a bottle. Color measurements may be performed using a HunterLab UltraScan XE (Hunter Associates Laboratory, Inc., Reston VA), which employs diffuse/8° (illumination/view angle) sphere optical geometry, or equivalent equipment with these same basic capabilities. The color scale employed is the CIE L*a*b* scale with D65 illuminant and 10° observer specified.

Preforms having a mean outer diameter of 21.49mm [0.846 inches] and a wall thickness of 3.912 mm [0.154 inches] may be measured in regular transmission mode using ASTM D1746, "Standard Test Method for Transparency of Plastic Sheeting". Preforms are held in place in the instrument using a preform holder, available from HunterLab, and triplicate measurements are averaged, whereby the sample is rotated 90° about its center axis between each measurement.

The intrinsic viscosity (It.V.) values described throughout this description are set forth in dL/g unit as calculated from the inherent viscosity (1h.V.) measured at 25°C in 60/40 wt/wt phenol/tetrachloroethane. The inherent viscosity is calculated from the measured solution viscosity. The following equations describe these solution viscosity measurements, and subsequent calculations to Ih.V. and from Ih.V. to It.V:

$$\eta_{inh} = [\ln (t_s/t_o)]/C$$

where $\eta_{inh}$ = Inherent viscosity at 25°C at a polymer concentration of 0.50 g/100 mL of 60% phenol and 40% 1,1,2,2-tetrachloroethane

ln = Natural logarithm

$t_s$ = Sample flow time through a capillary tube

$t_o$ = Solvent-blank flow time through a capillary tube

C = Concentration of polymer in grams per 100 mL of solvent (0.50%)

The intrinsic viscosity is the limiting value at infinite dilution of the specific viscosity of a polymer. It is defined by the following equation:

$$\eta_{int} = \lim_{C \to 0} (\eta_{sp}/C) = \lim_{C \to 0} \ln (\eta_r/C)$$

where $\eta_{int}$ = Intrinsic viscosity

$\eta_r$ = Relative viscosity = ts/to

$\eta_{sp}$ = Specific viscosity = $\eta_r$ - 1

Instrument calibration involves replicate testing of a standard reference material and then applying appropriate mathematical equations to produce the "accepted" I.V. values.

$$\text{Calibration Factor} = \text{Accepted IV of Reference Material} / \text{Average of Replicate Determinations}$$

$$\text{Corrected IhV} = \text{Calculated IhV} \times \text{Calibration Factor}$$

The intrinsic viscosity (It.V. or $\eta_{int}$) may be estimated using the Billmeyer equation as follows:

$$\eta_{int} = 0.5 [e^{0.5 \times \text{Corrected IhV}} - 1] + (0.75 \times \text{Corrected IhV})$$

Alternatively, the It.V. of the polymer may be determined according to ASTM D 5225-98.

Thus, a beneficial feature provided by polyester compositions containing transition metal compound particles is that the compositions made from these compositions have an improved reheat rate, expressed as a reheat index (RHI), relative to a control sample with no reheat additive.

We note that the polyester compositions according to the invention may have improved solid-stating stability compared to polyester compositions containing conventional reheat additives. By solid-stating stability we mean that there is little or no change in the reheat rate after the polymer undergoes solid-state polymerization in the presence of an air leak during the process. Constant reheat rate is important for the bottle blowing process. If the reheat rate varies as a result of the oxidation of the reheat additive, as is the case with antimony metal, then constant adjustments must be made to the oven power settings in order to maintain a consistent preform surface temperature from one preform to another.

According to the invention, in various embodiments, there are also provided concentrate compositions comprising transition metal compound particles, in an amount of at least 0.05 wt.%, or at least 2 wt.%, and up to about 20 wt.%, or up to 35 wt.%, and a thermoplastic polymer normally solid at 25°C and 1 atm such as a polyester, polyolefin, or polycarbonate in an amount of at least 65 wt.%, or at least 80 wt.%, or up to 99 wt.% or more, each based on the weight of the concentrate composition. The concentrate may be in liquid, molten state, or solid form. The converter of polymer to preforms has the flexibility of adding the particles to bulk polyester at the injection molding stage continuously, or intermittently, in liquid molten form or as a solid blend, and further adjusting the amount of the particles contained in the preform by metering the amount of concentrate to fit the end use application and customer requirements.

The concentrate may be made by mixing the transition metal compound particles with a polymer such as a polycarbonate, a polyester, a polyolefin, or mixtures of these, for example in a single or twin-screw extruder, and optionally compounding with other reheat additives. A suitable polycarbonate is bisphenol A polycarbonate. Suitable polyolefins include, but are not limited to, polyethylene and polypropylene, and copolymers thereof. Melt temperatures should be at least as high as the melting point of the polymer. For a polyester, such as PET, the melt temperatures are typically in the range of 250°-310°C. Preferably, the melt compounding temperature is maintained as low as possible. The extrudate may be withdrawn in any form, such as a strand form, and recovered according to the usual way such as cutting.

The concentrate may be prepared in a similar polyester as used in the final article. However, in some cases it may be advantageous to use another polymer in the concentrate, such as a polyolefin. In the case where a polyolefin/ transition metal compound particle concentrate is blended with the polyester, the polyolefin can be incorporated as a nucleator additive for the bulk polyester.

The concentrate may be added to a bulk polyester or anywhere along the different stages for manufacturing PET, in a manner such that the concentrate is compatible with the bulk polyester or its precursors. For example, the point of addition or the intrinsic viscosity (It.V.) (which is a measure of the polymer's molecular weight) of the concentrate may be chosen such that the It.V. of the polyethylene terephthalate and the It.V. of the concentrate are similar, e.g. +/- 0.2 dL/g It.V. measured at 25°C in a 60/40 wt/wt phenol/tetrachloroethane solution. A concentrate can be made with an It.V. ranging from 0.3 dL/g to 1.1 dL/g to match the typical It.V. of a polyethylene terephthalate under manufacture in the polycondensation stage. Alternatively, a concentrate can be made with an It.V. similar to that of solid-stated pellets used at the injection molding stage (e.g. It.V. from 0.6 dL/g to 1.1 dL/g).

Other components can be added to the polymer compositions of the present invention to enhance the performance properties of the polyester composition. For example, crystallization aids, impact modifiers, surface lubricants, denesting agents, stabilizers, antioxidants, ultraviolet light absorbing agents, catalyst deactivators, colorants, nucleating agents, acetaldehyde reducing compounds, other reheat enhancing aids, fillers, anti-abrasion additives, and the like can be included. The resin may also contain small amounts of branching agents such as trifunctional or tetrafunctional comonomers such as trimellitic anhydride, trimethylol propane, pyromellitic dianhydride, pentaerythritol, and other polyester forming polyacids or polyols generally known in the art. All of these additives and many others and their use are well known in the art. Any of these compounds can be used in the present composition.

The polyester compositions of the present invention may be used to form preforms used for preparing packaging containers. The preform is typically heated above the glass transition temperature of the polymer composition by passing the preform through a bank of quartz infrared heating lamps, positioning the preform in a bottle mold, and then blowing pressurized air through the open end of the mold.

A variety of other articles can be made from the polyester compositions of the invention. Articles include sheet, film, bottles, trays, other packaging, rods, tubes, lids, and injection molded articles. Any type of bottle can be made from the polyester compositions of the invention, and bottles are preferred articles according to the invention. Thus, in one embodiment, there is provided a beverage bottle made from PET suitable for holding water. In another embodiment, there is provided a heat-set beverage bottle suitable for holding beverages which are hot-filled into the bottle. In yet another embodiment, the bottle is suitable for holding carbonated soft drinks, or alcoholic beverages.

The transition metal compound reheat additives used in the invention affect the reheat rate, brightness and color of molded articles. Any one or more of these performance characteristics may be adjusted by varying the amount of reheat additive used, or by changing the particle size, or the particle size distribution.

The invention also provides processes for making polyester preforms that comprise feeding a liquid or solid bulk polyester and a liquid, molten or solid polyester concentrate composition to a machine for manufacturing the preform, the concentrate being as described elsewhere. According to the invention, not only may the concentrate be added at the stage for making preforms, but in other embodiments, there are provided processes for the manufacture of polyester compositions that comprise adding a concentrate polyester composition to a melt phase for the manufacture of virgin polyester polymers, the concentrate comprising the transition metal compound particles and at least 65 wt.% of a polyester polymer. Alternatively, the transition metal compound particles may be added to recycled PET, or a carrier may be used, which may be a reactive carrier, or a carrier that does not typically react with the polyester to any appreciable extent.

The polyester compositions according to the invention have a good reheat rate with acceptable color properties. The resulting polymers may also have excellent solid stating stability.

In yet another embodiment of the invention, there is thus provided a polyester beverage bottle made from a preform, wherein the preform has an L* value of 60 or more.

In each of the described embodiments, there are also provided additional embodiments encompassing the processes for the manufacture of each, and the preforms and articles, and in particular bottles, blow-molded from the preforms, as well as their compositions containing transition metal compound particles.

The polyester compositions of this invention may be any thermoplastic polymers, optionally containing any number of ingredients in any amounts, provided that the polyester component of the polymer is present in an amount of at least 30 wt.%, or at least 50 wt.%, or at least 80 wt.%, or even 90 wt.% or more, based on the weight of the polymer, the backbone of the polymer typically including repeating terephthalate or naphthalate units.

Examples of suitable polyester polymers include one or more of: PET, polyethylene naphthalate (PEN), poly (1,4-cyclo-hexylenedimethylene) terephthalate (PCT), poly(ethylene-co-1,4-cyclohexanedimethylene terephthalate) (PETG), poly(1,4-cyclohexylene dimethylene-co-ethylene terephthalate) (PCTG), and poly(ethylene-co-2,2,4,4-tetramethyl-1,3-cyclobutylene) terephthalate and their blends or their copolymers. The form of the polyester composition is not limited, and includes a melt in the manufacturing process or in the molten state after polymerization, such as may be found in an injection molding machine, and in the form of a liquid, pellets, preforms, and/or bottles. Polyester pellets may be isolated as a solid at 25°C and 1 atm in order for ease of transport and processing. The shape of the polyester pellet is not limited, and is typified by regular or irregular shaped discrete particles and may be distinguished from a sheet, film, or fiber.

It should also be understood that as used herein, the term polyester is intended to include polyester derivatives, including, but not limited to, polyether esters, polyester amides, and polyetherester amides. Therefore, for simplicity, throughout the specification and claims, the terms polyester, polyether ester, polyester amide, and polyetherester amide may be used interchangeably and are typically referred to as polyester, but it is understood that the particular polyester species is dependant on the starting materials, i.e., polyester precursor reactants and/or components.

In the broadest aspect of the invention, the location of the transition metal compound particles within the polyester compositions is not limited. The particles may be disposed anywhere on or within the polyester polymer, pellet, preform, or bottle. Preferably, the polyester polymer in the form of a pellet forms a continuous phase. By being distributed "within" the continuous phase we mean that the particles are found at least within a portion of a cross-sectional cut of the pellet. The particles may be distributed within the polyester polymer randomly, distributed within discrete regions, or distributed only within a portion of the polymer. In a preferred embodiment, the particles are disposed randomly throughout the polyester polymer composition as by way of adding the particles to a melt, or by mixing the particles with a solid polyester composition followed by melting and mixing.

The particles may be added in an amount so as to achieve an increased reheat rate while maintaining acceptable preform color properties.

Suitable amounts of the transition metal compound particles in the polyester compositions (other than polyester concentrate compositions as discussed elsewhere), preforms, and containers, may thus range from about 0.5 ppm to about 500 ppm (or even 1,000 ppm), based on the weight of the polymer in the polyester compositions, or as already described herein. The amount of the particles used may depend to some extent on the type and quality of the transition metal compound particles, the particle size, surface area, the morphology of the particle, and the level of reheat rate improvement desired.

The particle size may be measured with a laser diffraction type particle size distribution meter, or scanning or transmission electron microscopy methods. Alternatively, the particle size can be correlated by a percentage of particles screened through a mesh. Transition metal compound particles having a particle size distribution in which at least 80%, or at least 90%, or at least 95% of the particles fall through an ASTM-E11 140 sieve are suitable for use as reheat agents. Transition metal compound particles having a particle size distribution in which at least 80%, or at least 90%, or at least 95% of the particles fall through a ASTM-E11 325 sieve are also suitable for use as reheat agents.

In various other embodiments, there are provided polyester compositions, whether in the form of a melt, pellets, sheets, preforms, and/or bottles, comprising at least 0.5 ppm, or at least 10 ppm, or at least 25 ppm transition metal compound particles, having a $d_{50}$ particle size of less than 100 $\mu$m, or less than 50 $\mu$m, or less than 1 $\mu$m, wherein the polyester compositions have a disc L* value of 73 or more, or 80 or more, or even 82 or more, and an RHI of 1.10, or at least 1.05, or at least 1.02.

According to various embodiments of the invention, the transition metal compound particles may be added at any point during polymerization, which includes to the esterification zone, to the polycondensation zone comprised of the prepolymer zone and the finishing zone, to or prior to the pelletizing zone, and at any point between or among these zones. The particles may also be added to solid-stated pellets as they are exiting the solid-stating reactor. Furthermore, the particles may be added to the PET pellets in combination with other feeds to the injection molding machine, or may be fed separately to the injection molding machine. For clarification, the particles may be added in the melt phase or to an injection molding machine without solidifying and isolating the polyester composition into pellets. Thus, the particles can also be added in a melt-to-mold process at any point in the process for making the preforms. In each instance at a point of addition, the particles can be added as a powder neat, or in a liquid or solid carrier, or a polymer concentrate, and can be added to virgin or recycled PET, or added as a polymer concentrate using virgin or recycled PET as the PET polymer carrier.

In other embodiments, the invention relates to processes for the manufacture of polyester compositions containing transition metal compound particles, such as polyalkylene terephthalate or naphthalate polymers made by transesterifying a dialkyl terephthalate or dialkyl naphthalate or by directly esterifying terephthalic acid or naphthalene dicarboxylic acid.

Thus, there are provided processes for making polyalkylene terephthalate or naphthalate polymer compositions by transesterifying a dialkyl terephthalate or naphthalate or directly esterifying a terephthalic acid or naphthalene dicarboxylic acid with a diol, adding the transition compound particles to the melt phase for the production of a polyalkylene terephthalate or naphthalate after the prepolymer zone, or to polyalkylene terephthalate or naphthalate solids, or to an injection molding machine for the manufacture of bottle preforms.

Each of these process embodiments, along with a description of the polyester polymers, is now explained in further detail.

The polyester polymer may be PET, PEN, or copolymers or mixtures thereof. A preferred polyester polymer is polyethylene terephthalate. As used herein, a polyalkylene terephthalate polymer or polyalkylene naphthalate polymer means a polymer having polyalkylene terephthalate units or polyalkylene naphthalate units in an amount of at least 60 mole% based on the total moles of units in the polymer, respectively. Thus, the polymer may contain ethylene terephthalate or naphthalate units in an amount of at least 85 mole%, or at least 90 mole%, or at least 92 mole%, or at least 96 mole%, as measured by the mole% of ingredients added to the reaction mixture. Thus, a polyethylene terephthalate polymer may comprise a copolyester of ethylene terephthalate units and other units derived from an alkylene glycol or aryl glycol with an aliphatic or aryl dicarboxylic acid.

While reference is made in certain instances to polyethylene terephthalate, it is to be understood that the polymer may also be another polyester, for example a polyalkylene naphthalate polymer.

Polyethylene terephthalate can be manufactured by reacting a diacid or diester component comprising at least 60 mole % terephthalic acid or $C_1$ - $C_4$ dialkylterephthalate, or at least 70 mole %, or at least 85 mole %, or at least 90 mole %, and for many applications at least 95 mole%, and a diol component comprising at least 60 mole % ethylene glycol, or at least 70 mole %, or at least 85 mole %, or at least 90 mole %, and for many applications, at least 95 mole %. It is preferable that the diacid component is terephthalic acid and the diol component is ethylene glycol. The mole percentage for all the diacid component(s) totals 100 mole %, and the mole percentage for all the diol component(s) totals 100 mole %.

The polyester pellet compositions may include admixtures of polyalkylene terephthalates, PEN, or mixtures thereof, along with other thermoplastic polymers, such as polycarbonates and polyamides. It is preferred in many instances that the polyester composition comprise a majority of a polyalkylene terephthalate polymers or PEN polymers, or in an amount of at least 80 wt.%, or at least 95 wt.%, based on the weight of polymers (excluding fillers, compounds, inorganic compounds or particles, fibers, impact modifiers, or other polymers which may form a discontinuous phase). In addition to units derived from terephthalic acid, the acid component of the present polyester may be modified with, or replaced by, units derived from one or more other dicarboxylic acids, such as aromatic dicarboxylic acids preferably having from 8 to 14 carbon atoms, aliphatic dicarboxylic acids preferably having 4 to 12 carbon atoms, or cycloaliphatic dicarboxylic acids preferably having 8 to 12 carbon atoms.

Examples of additional dicarboxylic acid units useful for the acid component are units from phthalic acid, isophthalic acid, naphthalene-2,6-dicarboxylic acid, cyclohexanedicarboxylic acid, cyclohexanediacetic acid, diphenyl-4,4'-dicarboxylic acid, succinic acid, glutaric acid, adipic acid, azelaic acid, sebacic acid, and the like, with isophthalic acid, naphthalene-2,6-dicarboxylic acid, and cyclohexanedicarboxylic acid being preferable.

It should be understood that use of the corresponding acid anhydrides, esters, and acid chlorides of these acids is included in the term "dicarboxylic acid".

In addition to units derived from ethylene glycol, the diol component of the present polyester may be modified with, or replaced by, units from additional diols including cycloaliphatic diols preferably having 6 to 20 carbon atoms and aliphatic diols preferably having 2 to 20 carbon atoms. Examples of such additional diols include diethylene glycol (DEG); triethylene glycol; 1,4-cyclohexanedimethanol; propane-1,3-diol; butane-1,4-diol; pentane-1,5-diol; hexane-1,6-diol; 3-methylpentanediol- (2,4); 2-methylpentanediol-(1,4); 2,2,4-trimethylpentane-diol-(1,3); 2,5-ethylhexanediol-(1,3); 2,2-diethyl propane-diol-(1, 3); hexanediol-(1,3); 1,4-di-(hydroxyethoxy)-benzene; 2,2-bis-(4-hydroxycyclohexyl)-propane; 2,4-dihydroxy-1,1,3,3-tetramethyl-cyclobutane; 2,2-bis-(3-hydroxyethoxyphenyl)-propane; and 2,2-bis-(4-hydroxypropoxyphenyl)-propane; and 2,2,4,4-tetramethyl-1,3-cyclobutanediol.

The polyester compositions of the invention may be prepared by conventional polymerization procedures well-known in the art sufficient to effect esterification and polycondensation. Polyester melt phase manufacturing processes include direct condensation of a dicarboxylic acid with a diol optionally in the presence of esterification catalysts in the esterification zone, followed by polycondensation in the prepolymer and finishing zones in the presence of a polycondensation catalyst; or else ester interchange usually in the presence of a transesterification catalyst in the esterification zone; followed by prepolymerization and finishing in the presence of a polycondensation catalyst, and each may optionally be subsequently solid-stated according to known methods. After melt phase and/or solid-state polycondensation the polyester polymer compositions typically have an intrinsic viscosity (It.V.) ranging from 0.55 dL/g to about 0.80 dL/g as precursor pellets, and an It.V. ranging from about 0.70 dL/g to about 1.1 dL/g for solid stated pellets.

To further illustrate, a mixture of one or more dicarboxylic acids, preferably aromatic dicarboxylic acids, or ester forming derivatives thereof, and one or more diols, are continuously fed to an esterification reactor operated at a temperature of between about 200°C and 300°C, typically between 240°C and 290°C, and at a pressure of about 6.895 kgm$^{-1}$s$^{-2}$ (1 psig) up to about 482633 kgm$^{-1}$s$^{-2}$ (70 psig). The residence time of the reactants typically ranges from between about one and five hours. Normally, the dicarboxylic acid is directly esterified with diol(s) at elevated pressure and at a temperature of about 240°C to about 270°C. The esterification reaction is continued until a degree of esterification of at least 60% is achieved, but more typically until a degree of esterification of at least 85% is achieved to make the desired monomer. The esterification monomer reaction is typically uncatalyzed in the direct esterification process and catalyzed in transesterification processes. Polycondensation catalysts may optionally be added in the esterification zone along with esterification/transesterification catalysts.

Typical esterification/transesterification catalysts which may be used include titanium alkoxides, dibutyl tin dilaurate, used separately or in combination, optionally with zinc, manganese, or magnesium acetates or benzoates and/or other such catalyst materials as are well known to those skilled in the art. Phosphorus-containing compounds and cobalt compounds may also be present in the esterification zone. The resulting products formed in the esterification zone include bis(2-hydroxyethyl) terephthalate (BHET) monomer, low molecular weight oligomers, DEG, and water as the condensation by-product, along with other trace impurities formed by the reaction of the catalyst and other compounds such as colorants or the phosphorus-containing compounds. The relative amounts of BHET and oligomeric species will vary depending on whether the process is a direct esterification process, in which case the amount of oligomeric species are significant and even present as the major species, or a transesterification process, in which case the relative quantity of BHET predominates over the oligomeric species. The water is removed as the esterification reaction proceeds and excess ethylene glycol is removed to provide favorable equilibrium conditions. The esterification zone typically produces the monomer and oligomer mixture, if any, continuously in a series of one or more reactors. Alternatively, the monomer and oligomer mixture could be produced in one or more batch reactors.

It is understood, however, that in a process for making PEN, the reaction mixture will contain monomeric species such as bis(2-hydroxyethyl) naphthalate and its corresponding oligomers. Once the ester monomer is made to the desired degree of esterification, it is transported from the esterification reactors in the esterification zone to the polycondensation zone comprised of a prepolymer zone and a finishing zone.

Polycondensation reactions are initiated and continued in the melt phase in a prepolymerization zone and finished in the melt phase in a finishing zone, after which the melt may be solidified into precursor solids in the form of chips, pellets, or any other shape. For convenience, solids are referred to as pellets, but it is understood that a pellet can have any shape, structure, or consistency. If desired, the polycondensation reaction may be continued by solid-stating the precursor pellets in a solid-stating zone.

Although reference is made to a prepolymer zone and a finishing zone, it is to be understood that each zone may comprise a series of one or more distinct reaction vessels operating at different conditions, or the zones may be combined into one reaction vessel using one or more sub-stages operating at different conditions in a single reactor. That is, the prepolymer stage can involve the use of one or more reactors operated continuously, one or more batch reactors or even one or more reaction steps or sub-stages performed in a single reactor vessel. In some reactor designs, the prepolymerization zone represents the first half of polycondensation in terms of reaction time, while the finishing zone represents the second half of polycondensation. While other reactor designs may adjust the residence time between the prepolymerization zone to the finishing zone at about a 2:1 ratio, a common distinction in all designs between the prepolymerization zone and the finishing zone is that the latter zone generally operates at a higher temperature, lower pressure, and a higher surface renewal rate than the operating conditions in the prepolymerization zone. Generally, each of the prepolymerization and the finishing zones comprise one or a series of more than one reaction vessel, and the prepolymerization and finishing reactors are sequenced in a series as part of a continuous process for the manufacture of the polyester polymer.

In the prepolymerization zone, also known in the industry as the low polymerizer, the low molecular weight monomers and minor amounts of oligomers are polymerized via polycondensation to form polyethylene terephthalate polyester (or PEN polyester) in the presence of a catalyst. If the catalyst was not added in the monomer esterification stage, the catalyst is added at this stage to catalyze the reaction between the monomers and low molecular weight oligomers to form prepolymer and split off the diol as a by-product. If a polycondensation catalyst was added to the esterification zone, it is typically blended with the diol and fed into the esterification rector as the diol feed. Other compounds such as phosphorus-containing compounds, cobalt compounds, and colorants can also be added in the prepolymerization zone. These compounds may, however, be added in the finishing zone instead of or in addition to the prepolymerization zone.

In a typical DMT-based process, those skilled in the art recognize that other catalyst material and points of adding the catalyst material and other ingredients vary from a typical direct esterification process.

Typical polycondensation catalysts include the compounds of antimony, titanium, germanium, zinc and tin in an amount ranging from 0.1 ppm to 1,000 ppm based on the weight of resulting polyester polymer. A common polymerization catalyst added to the prepolymerization zone is an antimony-based polymerization catalyst. Suitable antimony-based catalysts include antimony (III) and antimony (V) compounds recognized in the art, and in particular, diol-soluble antimony (III) and antimony (V) compounds with antimony (III) being most commonly used. Other suitable compounds include those antimony compounds that react with, but are not necessarily soluble in, the diols, with examples of such compounds including antimony (III) oxide. Specific examples of suitable antimony catalysts include antimony (III) oxide and antimony (III) acetate, antimony (III) glycolates, antimony (III) ethyleneglycoxide and mixtures thereof, with antimony (III) oxide being preferred. The amount of antimony catalyst added, for example, may be that amount that is effective to provide a level of between about 75 ppm and about 400 ppm of antimony by weight of the resulting polyester.

This prepolymer polycondensation stage generally employs a series of two or more vessels and is operated at a temperature of between about 250°C and 305°C for between about one and four hours. During this stage, the It.V. of the monomers and oligomers is typically increased up to about no more than 0.35 dL/g. The diol byproduct is removed from the prepolymer melt using an applied vacuum ranging from 2000 kgm$^{-1}$s$^{-2}$ (15 torr) to 9.333 kgm$^{-1}$s$^{-2}$ (70 torr) to drive the reaction to completion. In this regard, the polymer melt is typically agitated to promote the escape of the diol from the polymer melt and to assist the highly viscous polymer melt in moving through the polymerization vesseis. As the polymer melt is fed into successive vessels, the molecular weight and thus the intrinsic viscosity of the polymer melt increases. The temperature of each vessel is generally increased and the pressure decreased to allow for a greater degree of polymerization in each successive vessel. However, to facilitate removal of glycols, water, alcohols, aldehydes, and other reaction products, the reactors are typically run under a vacuum or purged with an inert gas. Inert gas is any gas which does not cause unwanted reaction or product characteristics at reaction conditions. Suitable gases include, but are not limited to, carbon dioxide, argon, helium, and nitrogen.

Once an It.V. of typically no greater than 0.35 dL/g is obtained, the prepolymer is fed from the prepolymer zone to a finishing zone where the second half of polycondensation is continued in one or more finishing vessels ramped up to higher temperatures than present in the prepolymerization zone, to a value within a range of from 280°C to 305°C until the It.V. of the melt is increased from the It.V of the melt in the prepolymerization zone (typically 0.30 dL/g but usually not more than 0.35 dL/g) to an It.V in the range of from about 0.50 dL/g to about 0.80 dL/g. The final vessel, generally known in the industry as the "high polymerizer," "finisher," or "polycondenser," is operated at a pressure lower than used in the prepolymerization zone, typically within a range of between about 107kgm$^{-1}$s$^{-2}$ (0.8 torr) and 533.3kgm$^{-1}$s$^{-2}$ (4.0 torr). Although the finishing zone typically involves the same basic chemistry as the prepolymer zone, the fact that the size of the molecules, and thus the viscosity, differs, means that the reaction conditions also differ. However, like the prepolymer reactor, each of the finishing vessel(s) is connected to a flash vessel and each is typically agitated to facilitate the removal of ethylene glycol.

The residence time in the polycondensation vessels and the feed rate of the ethylene glycol and terephthalic acid into the esterification zone in a continuous process is determined in part based on the target molecular weight of the polyethylene terephthalate polyester. Because the molecular weight can be readily determined based on the intrinsic viscosity of the polymer melt, the intrinsic viscosity of the polymer melt is generally used to determine polymerization conditions, such as temperature, pressure, the feed rate of the reactants, and the residence time within the polycondensation vessels.

Once the desired It.V. is obtained in the finisher, the melt is fed to a pelletization zone where it is filtered and extruded into the desired form. The polyester polymers of the present invention are filtered to remove particulates over a designated size, followed by extrusion in the melt phase to form polymer sheets, filaments, or pellets. Although this zone is termed a "pelletization zone," it is understood that this zone is not limited to solidifying the melt into the shape of pellets, but includes solidification into any desired shape. Preferably, the polymer melt is extruded immediately after polycondensation. After extrusion, the polymers are quenched, preferably by spraying with water or immersing in a water trough, to promote solidification. The solidified condensation polymers are cut into any desired shape, including pellets.

As known to those of ordinary skill in the art, the pellets formed from the condensation polymers, in some circumstances, may be subjected to a solid-stating zone wherein the solids are first crystallized followed by solid-state polymerization (SSP) to further increase the It.V. of the polyester composition solids from the It.V exiting the melt phase to the desired It.V. useful for the intended end use. Typically, the It.V, of solid stated polyester solids ranges from 0.70 dL/g to 1.15 dL/g. In a typical SSP process, the crystallized pellets are subjected to a countercurrent flow of nitrogen gas heated to 180°C to 220°C, over a period of time as needed to increase the It.V. to the desired target.

Thereafter, polyester polymer solids, whether solid stated or not, are remelted and re-extruded to form items such as containers (e.g., beverage bottles), filaments, films, or other applications. At this stage, the pellets are typically fed into an injection molding machine suitable for making preforms which are stretch blow molded into bottles.

As noted, the transition metal compound particles may be added at any point in the melt phase or thereafter, such as to the esterification zone, to the prepolymerization zone, to the finishing zone, or to the pelletizing zone, or at any point between each of these zones, such as to metering devices, pipes, and mixers. The transition metal compound particles can also be added to the pellets in a solid stating zone within the solid stating zone or as the pellets exit the solid-stating reactor. Furthermore, the transition metal compound particles may be added to the pellets in combination with other feeds to the injection molding machine or fed separately to the injection molding machine.

If the transition metal compound particles are added to the melt phase, it is desirable to use particles having a small enough d$_{50}$ particle size to pass through the filters in the melt phase, and in particular the pelletization zone. In this way, the particles will not clog up the filters as seen by an increase in gear pump pressure needed to drive the melt through the filters. However, if desired, the particles can be added after the pelletization zone filter and before or to the extruder.

In addition to adding the particles to virgin polymer, whether to make a concentrate or added neat to the melt phase after the prepolymerization reactors or to an injection molding zone, the particles may also be added to post-consumer recycle (PCR) polymer. PCR containing the particles is added to virgin bulk polymers by solid/solid blending or by feeding both solids to an extruder. Alternatively, PCR polymers containing the transition metal compound particles are advantageously added to the melt phase for making virgin polymer between the prepolymerization zone and the finishing zone. The It.V. of the virgin melt phase after the prepolymerization zone is sufficiently high at that point to enable the PCR to be melt blended with the virgin melt. Alternatively, PCR may be added to the finisher. In either case, the PCR added to the virgin melt phase may contain the particles. The particles may be combined with PCR by any of the methods noted above, or separately fed to and melt blended in a heated vessel, followed by addition of the PCR melt containing the particles to the virgin melt phase at these addition points.

Other components can be added to the compositions of the present invention to enhance the performance properties of the polyester polymers. For example, crystallization aids, impact modifiers, surface lubricants, denesting agents, stabilizers, antioxidants, ultraviolet light absorbing agents, catalyst deactivators, colorants, nucleating agents, acetaldehyde reducing compounds, other reheat rate enhancing aids, additives to reduce the bottle-to-bottle coefficient of friction, such as talc, and fillers and the like can be included. The polymer may also contain small amounts of branching agents such as trifunctional or tetrafunctional comonomers such as trimellitic anhydride, trimethylol propane, pyromellitic dianhydride, pentaerythritol, and other polyester forming polyacids or diols generally known in the art. All of these additives and many others and their use are well known in the art and do not require extensive discussion. Any of these compounds can be used in the present composition. It is preferable that the present composition be essentially comprised of a blend of thermoplastic polymer and the transition metal compound particles, with only a modifying amount of other ingredients being present.

Examples of other reheat rate enhancing additives that may be used in combination with the transition metal compound particles of the invention include carbon black, antimony, black iron oxide, and the like, as well as near infrared absorbing dyes, including, but not limited to, those disclosed in U.S. Pat. No. 6,197,851.

The compositions of the present invention optionally may additionally contain one or more UV absorbing compounds. One example includes UV-absorbing compounds which are covalently bound to the polyester molecule as either a comonomer, a side group, or an end group. Suitable UV-absorbing compounds are thermally stable at polyester processing temperatures, absorb in the range of from about 320 nm to about 380 nm, and are nonextractable from the polymer. The UV-absorbing compounds preferably provide less than about 20%, more preferably less than about 10%, transmittance of UV light having a wavelength of 370 nm through a bottle wall 305 $\mu$m thick. Suitable chemically reactive UV absorbing compounds may include, for example, substituted methine compounds. The compositions may also include UV absorbing compounds which are not chemically bound to the polymer backbone.

Suitable compounds, their methods of manufacture and incorporation into polyesters are further disclosed in U.S. Pat. No. 4,617,374. The UV-absorbing compound(s) may be present in amounts between about 1 ppm to about 5,000 ppm by weight, preferably from about 2 ppm to about 1,500 ppm, and more preferably between about 10 ppm and about 500 ppm by weight. Dimers of the UV absorbing compounds may also be used. Mixtures of two or more UV absorbing compounds may be used. Moreover, because the UV absorbing compounds are reacted with or copolymerized into the backbone of the polymer, the resulting polymers display improved processability including reduced loss of the UV absorbing compound due to plateout and/or volatilization and the like.

The polyester compositions of the present invention are suitable for forming a variety of shaped articles, including films, sheets, tubes, preforms, molded articles, containers and the like. Suitable processes for forming the articles are known and include extrusion, extrusion blow molding, melt casting, injection molding, stretch blow molding, thermoforming, and the like.

The polyesters of this invention may also, optionally, contain color stabilizers, such as certain cobalt compounds. These cobalt compounds can be added as cobalt acetates or cobalt alcoholates (cobalt salts or higher alcohols). They can be added as solutions in ethylene glycol. Polyester resins containing high amounts of the cobalt additives can be prepared as a masterbatch for extruder addition. The addition of the cobalt additives as color toners is a process used to minimize or eliminate the yellow color, b*, of the resin. Other cobalt compounds such as cobalt aluminate, cobalt benzoate, cobalt chloride and the like may also be used as color stabilizers. It is also possible to add certain diethylene glycol (DEG) inhibitors to reduce or prevent the formation of DEG in the final resin product. Preferably, a specific type of DEG inhibitor would comprise a sodium acetate-containing composition to reduce formation of DEG during the esterification and polycondensation of the applicable diol with the dicarboxylic acid or hydroxyalkyl, or hydroxyalkoxy substituted carboxylic acid. It is also possible to add stress crack inhibitors to improve stress crack resistance of bottles, or sheeting, produced from this resin.

With regard to the type of polyester which can be utilized, any high clarity, neutral hue polyester, copolyester, etc., in the form of a resin, powder, sheet, etc., can be utilized to which it is desired to improve the reheat time or the heat-up time of the resin. Thus, polyesters made from either the dimethyl terephthalate or the terephthalic acid route or various homologues thereof as well known to those skilled in the art along with conventional catalysts in conventional amounts and utilizing conventional processes can be utilized according to the present invention. Moreover, the type of polyester can be made according to melt polymerization, solid state polymerization, and the like. Moreover, the present invention can be utilized for making high clarity, low haze powdered coatings. An example of a preferred type of high clarity polyester resin is one in which the polyester resin is produced utilizing antimony catalysts, low amounts of phosphorus, and a bluing agent which can be a cobalt compound.

As noted above, the polyester is produced in a conventional manner as from the reaction of a dicarboxylic acid having from 2 to 40 carbon atoms with polyhydric alcohols such as glycols or diols containing from 2 to about 20 carbon atoms. The dicarboxylic acids can be an alkyl having from 2 to 20 carbon atoms, or an aryl, or alkyl substituted aryl containing from 8 to 16 carbon atoms. An alkyl diester having from 4 to 20 carbon atoms or an alkyl substituted aryl diester having from 10 to 20 carbon atoms can also be utilized. Desirably, the diols can contain from 2 to 8 carbon atoms and preferably is ethylene glycol. Moreover, glycol ethers having from 4 to 12 carbon atoms may also be used. Generally, most of the commonly produced polyesters are made from either dimethyl terephthalate or terephthalic acid with ethylene glycol. When powdered resin coatings are made, neopentyl glycol is often used in substantial amounts.

Specific areas of use of the polyester include situations wherein preforms exist which then are heated to form a final product, for example, as in the use of preforms which are blow-molded to form a bottle, for example, a beverage bottle, and the like. Another use is in preformed trays, preformed cups, and the like, which are heated and drawn to form the final product. Yet another use relates to polyester yam which is forced through a plurality of spinnerets having an infrared quench collar thereabout. Additionally, the present invention is applicable to highly transparent, clear and yet low haze powdered coatings wherein a desired transparent film or the like is desired.

This invention can be further illustrated by the following examples of preferred embodiments.

## EXAMPLES

Example 1, Reference example

Titanium nitride (TiN) particles were purchased from Aldrich Chemical Company (catalog number 33,324-7; CAS number 25583-20-4). As stated by the vendor, the particle size was less than 10 $\mu$m and the purity was 99%. The sample was examined by scanning electron microscopy (SEM) to determine particle shape and average particle size. The $d_{50}$ median particle diameter as measured by SEM was 2.5 $\mu$m, and the S (span) was 2.9.

Reheat rate and color were evaluated by blending TiN particles into a commercial PET resin, Voridian™ 9921W Polymer (available from Eastman Chemical Company, Kingsport, Tennessee), and making molded discs using a DACA Instruments MicroCompounder/ MicroInjector. The Daca MicroCompounder is a small scale (4.5 cc maximum volume) twin-screw batch mixer. It consists of two 127mm (5-inch) vertically mounted conical mixing screws, two barrel heaters with temperature controllers, and a 1/3 hp DC gear motor, a load sensor and a torque display.

A concentrate of 9921W containing 2,730 ppm TiN particles was prepared by mixing 0.069 g TiN with 25.2 g of dried 9921W, which had been ground to a coarse powder in a Wiley Mill equipped with a 3 mm screen. The mixture was then extruded through the MicroCompounder at a temperature of approximately 285 °C and a screw speed of 120 rpm. Once the concentrate was prepared, it was ground to pass through a 3-mm screen in a Wiley Mill. The concentrate was then combined with additional granulated 9921W to give final TiN concentrations of 25, 50 and 100 ppm in 9921W. After combining the concentrate with granulated 9921W, the mixtures were dried overnight at 110 °C in a vacuum oven at approximately 762 mm (30 inches) water. The samples were then extruded using the MicroCompounder at a temperature of approximately 285 °C and a screw speed of 120 rpm. The extrudate was ground through a 3 mm screen in a Wiley Mill. Discs were prepared from the samples using the MicroCompounder/ MicroInjector combination. The MicroInjector is a small injection molding machine capable of producing molded discs. It consists of a portable heated barrel, a heated block to support a conical self-clamping mold, a pneumatically driven injection piston, and a pneumatic injection cylinder used to eject the mold at the completion of each molding cycle. The portable heated barrel is filled with polymer extruded from the MicroCompounder by attaching it to the exit nozzle. The portable barrel is then moved to the injection machine, where a 67-mil thick, 2.9 cm diameter disc is molded. The approximate chip molding conditions were as follows: 298 °C screw temperature, 294 °C barrel temperature, 14 °C mold temperature, 827371 kgm$^{-1}$s$^{-2}$ (120 psi) injection pressure, and 1.4 scfh nitrogen flow to the inlet throat. Three discs were molded from each composition.

Color measurement (L*, a*, b* and haze) was performed using a HunterLab UltraScan XE (Hunter Associates Laboratory, Inc., Reston VA), which employs diffuse/8° (illumination/view angle) sphere optical geometry. The color scale employed was the CIE LAB scale with D65 illuminant and 10° observer specified. Three chips were stacked together to give a sample of approximately 200 mil (0.51 cm) thickness. The three chips were stacked together and placed in the sample holder inside the instrument such that the area of largest surface area was placed perpendicular to the light source. The color measurements were made in the total transmission (TTRAN) mode, in which both light transmitted directly through the sample and light that is diffusely scattered is measured. Color in transmission at any thickness can be recalculated according to the following:

$$T_h = T_o \, 10^{-\beta h}$$

$$\beta = \frac{\log_{10}\left(T_o / T_d\right)}{d}$$

where

$T_h$ = transmittance at target thickness

$T_o$ = transmittance without absorption

β = Absorption coefficient

$T_d$ = transmittance measured for sample

h = target thickness

d = thickness of sample

The reheat rate of the molded discs was determined as follows. The disc was placed onto a support which was in contact with the sample along its edges only. An actuator then automatically moved the disc beneath a pyrometer and measured the initial temperature ($T_i$). The disc was then moved to a fixed distance below a lamp housing equipped with a bulb (GE DYH projection bulb, 250 W, 120 V) operating at 60 V. The sample was exposed to a radiant light for 20 seconds. The color temperature of the lamp was approximately 2,200 °C. After heating, the disc was automatically returned to the pyrometer where the surface temperature ($T_f$) of the center area of the side which faced the lamp (front side) was recorded two seconds after the lamp was turned off. A 90-second cooling cycle was used between consecutive tests, during which a fan cooled the lamp housing prior to loading the next sample. The reheat index (known as RHI) was then calculated by comparing the temperature difference of a test sample with that of a control sample containing no reheat additive (9921W), as shown in the following equation:

$$RHI = \frac{\left(T_f - T_i\right)_{sample}}{\left(T_f - T_i\right)_{control}}$$

The results for entries 1 through 4 in Table 1 illustrate the effectiveness of TiN particles at increasing the reheat rate of PET. In each case, the PET compositions containing TiN particles had higher RHI values than the control sample with no additive.

TABLE 1

| Entry | Additive | Nominal Additive Level, ppm | Delta T (°C) | Reheat Index (RHI) | Disc L* | Disc a* | Disc b* | Disc haze |
|---|---|---|---|---|---|---|---|---|
| 1 | TiN Reference examples | 0 | 33.86 | 1.00 | 83.73 | -0.31 | 2.06 | 19.17 |
| 2 | | 25 | 34.68 | 1.02 | 81.96 | -1.19 | 3.60 | 15.00 |
| 3 | | 50 | 35.43 | 1.05 | 80.39 | -1.31 | 3.56 | 16.64 |
| 4 | | 100 | 36.59 | 1.08 | 77.52 | -1.44 | 2.97 | 21.65 |
| 5 | VN | 0 | 33.86 | 1.00 | 83.73 | -0.31 | 2.06 | 19.17 |
| 6 | | 25 | 34.39 | 1.02 | 82.02 | -0.67 | 3.57 | 23.11 |
| 7 | | 50 | 34.71 | 1.03 | 82.11 | -0.69 | 3.29 | 14.37 |
| 8 | | 100 | 35.26 | 1.05 | 80.45 | -0.71 | 3.04 | 14.31 |

(continued)

| Entry | Additive | Nominal Additive Level, ppm | Delta T (°C) | Reheat Index (RHI) | Disc L* | Disc a* | Disc b* | Disc haze |
|---|---|---|---|---|---|---|---|---|
| 9 | ZrN | 0 | 33.86 | 1.00 | 83.73 | -0.31 | 2.06 | 19.17 |
| 10 | | 25 | 34.74 | 1.03 | 81.33 | -0.77 | 3.84 | 15.74 |
| 11 | | 50 | 34.70 | 1.03 | 81.49 | -0.74 | 3.58 | 13.33 |
| 12 | | 100 | 34.75 | 1.03 | 81.14 | -0.75 | 3.37 | 15.44 |
| 13 | TaN | 0 | 33.79 | 1.00 | 83.62 | -0.56 | 3.33 | 6.36 |
| 14 | | 25 | 33.71 | 1.00 | 84.66 | -0.56 | 3.17 | 5.83 |
| 15 | | 52 | 34.35 | 1.02 | 83.31 | -0.58 | 3.27 | 6.66 |
| 16 | | 102 | 34.48 | 1.02 | 83.41 | -0.58 | 3.17 | 7.20 |
| 17 | TiB | 0 | 33.98 | 1.00 | 83.82 | -0.31 | 2.00 | 20.66 |
| 18 | | 25 | 34.62 | 1.02 | 82.36 | -1.03 | 3.63 | 11.38 |
| 19 | | 50 | 35.17 | 1.04 | 80.65 | -0.89 | 3.39 | 13.55 |
| 20 | | 100 | 36.18 | 1.07 | 77.97 | -0.89 | 3.34 | 18.03 |
| 21 | ZrB$_2$ | 0 | 33.98 | 1.00 | 83.82 | -0.31 | 2.00 | 20.66 |
| 22 | | 13 | 35.04 | 1.05 | 80.81 | -0.77 | 3.97 | 13.63 |
| 23 | | 28 | 35.14 | 1.05 | 80.78 | -0.78 | 3.69 | 15.41 |
| 24 | | 86 | 35.58 | 1.07 | 79.24 | -0.68 | 3.24 | 17.91 |
| 25 | VC | 0 | 33.98 | 1.00 | 83.82 | -0.31 | 2.00 | 20.66 |
| 26 | | 15 | 34.75 | 1.04 | 81.68 | -0.63 | 3.82 | 15.60 |
| 27 | | 29 | 34.77 | 1.04 | 81.98 | -0.70 | 3.27 | 16.03 |
| 28 | | 86 | 35.81 | 1.07 | 80.05 | -0.78 | 3.34 | 15.08 |

Example 2

The procedure of Example 1 was followed, except using vanadium nitride (VN) as the reheat additive. The VN sample was obtained from Aldrich Chemical Company (catalog number 336335), and had a stated purity of 99% and a particle size of less than 325 mesh (maximum particle size less than 44 μm). The reheat and color results for VN are given as Entries 5 through 8 in Table 1. The results illustrate that the VN particles are effective at increasing the reheat rate of PET. In each case, the PET compositions containing VN particles had higher RHI values than the control sample with no additive.

Example 3

The procedure of Example 1 was followed, except using zirconium nitride (ZrN) as the reheat additive. The ZrN sample was obtained from Aldrich Chemical Company (catalog number 39,943-4; CAS number 25658-42-8), and had a stated particle size of less than 325 mesh (maximum particle size less than 44 μm). The reheat and color results for ZrN are given as Entries 9 through 12 in Table 1. The results illustrate that the ZrN particles are effective at increasing the reheat rate of PET. In each case, the PET compositions containing ZrN particles had higher RHI values than the control sample with no additive.

Example 4

The procedure of Example 1 was followed except using tantalum nitride (TaN) as the reheat additive. The sample was obtained from Aldrich Chemical Company (catalog # 33,320-4; CAS number 12033-62-4) and had a stated average particle size of less than 5 μm. The reheat and color results for TaN are given as Entries 13 through 16 in Table 1. The results show that the TaN particles increase the reheat rate of PET when present at a concentration of 50 ppm or greater.

Example 5

The procedure of Example 1 was followed except using titanium boride (TiB) as the reheat additive. The sample was obtained from Aldrich Chemical Company (catalog # 33,628-9; CAS number 12045-63-5) and had a stated particle size of approximately 10 $\mu$m. The reheat and color results for TiB are given as Entries 17 through 20 in Table 1. The results show that the TiB particles are effective at increasing the reheat rate of PET. In each case, the PET compositions containing TiB particles had higher RHI values than the control sample with no additive.

Example 6

The procedure of Example 1 was followed except using zirconium diboride (ZrB$_2$) as the reheat additive and using final concentrations of 13, 28 and 86 ppm, in the polymer. The ZrB$_2$ particles were obtained from Aldrich Chemical Company (catalog number 33,634-3, CAS number 12045-64-6) and had a stated particle size of less than 5 $\mu$m and a stated purity of 95%. The reheat and color results for ZrB$_2$ are given as Entries 21 through 24 in Table 1. The results show that the ZrB$_2$ particles are effective at increasing the reheat rate of PET. In each case, the PET compositions containing ZrB$_2$ particles had higher RHI values than the control sample with no additive.

Example 7

The procedure of Example 1 was followed except using vanadium carbide (VC) as the reheat additive and using final concentrations of 13, 28 and 86 ppm in the polymer. The VC particles were obtained from Aldrich Chemical Company (catalog number 33,632-7, CAS number 12070-10-9) and had a stated particle size of 1.5 to 2 $\mu$m. The reheat and color results for VC are given as Entries 25 through 28 in Table 1. The results show that the VC particles are effective at increasing the reheat rate of PET. In each case, the PET compositions containing VC particles had higher RHI values than the control sample with no additive.

**Claims**

1.   A polyester composition having improved reheat, comprising:

a polyester polymer; and
particles of one or more transition metal compounds, dispersed in the polyester polymer in an amount from 0.5 ppm to 1,000 ppm with respect to the total weight of the polyester composition, the transition metal compounds being binary compounds of a transition metal element selected from titanium, vanadium, zirconium, niobium, hafnium, and tantalum, and a non-metallic element selected from boron, carbon, and nitrogen, with the provisos that said one transition metal compound is not titanium nitride or titanium carbide.

2.   The polyester composition of claim 1, wherein the particles of the one or more transition metal compounds are present in an amount from 1 ppm to 750 ppm with respect to the total weight of the polyester composition.

3.   The polyester composition of claim 1, wherein the particles of the one or more transition metal compounds are present in an amount from 5 ppm to 500 ppm with respect to the total weight of the polyester composition.

4.   The polyester composition of claim 1, wherein the particles of the one or more transition metal compounds are present in an amount from 5 ppm to 250 ppm with respect to the total weight of the polyester composition.

5.   The polyester composition of claim 1, wherein the particles of the one or more transition metal compounds comprises one ore more of: a vanadium nitride, a zirconium nitride, a tantalum nitride, a titanium boride, a zirconium boride, or a vanadium carbide.

6.   The polyester composition of claim 1, wherein the one or more transition metal compounds comprises a vanadium nitride.

7.   The polyester composition of claim 1, wherein the one or more transition metal compounds comprises a zirconium nitride.

8. The polyester composition of claim 1, wherein the one or more transition metal compounds comprises a tantalum nitride.

9. The polyester composition of claim 1, wherein the one or more transition metal compounds comprises a titanium boride.

10. The polyester composition of claim 1, wherein the one or more transition metal compounds comprises a zirconium boride.

11. The polyester composition of claim 1, wherein the one or more transition metal compounds comprises a vanadium carbide.

12. The polyester composition of claim 1, wherein the polyester polymer comprises polyethylene terephthalate.

13. The polyester composition of claim 1, wherein the polyester composition is in the form of a beverage bottle preform.

14. The polyester composition of claim 1, wherein the polyester composition is in the form of a beverage bottle.

15. The polyester composition of claim 1, wherein the polyester composition is in the form of a molded article.

16. The polyester composition of claim 1, wherein the polyester polymer comprises a continuous phase, and wherein the particles of the one or more transition metal compounds are dispersed within the continuous phase.

17. The polyester composition of claim 1, wherein the particles of the one or more transition metal compounds are present in an amount from 5 ppm to 500 ppm with respect to the total weight of the polyester composition, and wherein the particles provide a polyester composition that reheats in the presence of infrared energy to a higher temperature in a given time than it would in the absence of such particles.

18. The polyester composition of claim 1, wherein the composition is in the form of a beverage bottle preform having a preform L* value of 70 or more, and a b* value from minus 0.8 to plus 2.5.

19. The polyester composition of claim 1, wherein the particles of the one or more transition metal compounds compose particles coated with the one or more transition metal compounds.

20. The polyester composition of claim 1, wherein the particles of the one or more transition metal compounds comprise hollow spheres of the one or more transition metal compounds.

21. The polyester composition of claim 1, wherein the particles of the one or more transition metal compounds comprise the one or more transition metal compounds in an amount of at least 90 wt.%, with respect to the total weight of the particles.

22. The polyester composition of claim 15, wherein the particles of the one or more transition metal compounds further comprise one or more of the transition metals in elemental form.

23. The polyester composition of claim 1, wherein the particles have a particle size distribution in which the span (S) is from 0 to 10.

24. The polyester composition of claim 1, wherein the particles have a particle size distribution in which the span (S) is from 0.01 to 2.

25. A beverage bottle preform having improved reheat, comprising:

a polyester polymer in which poly(ethylene terephthalate) residues comprise at least 90 wt.% of the polyester polymer; and
particles of one or more transition metal compounds, randomly dispersed in the polyester polymer in an amount from 0.5 ppm, to 1,000 ppm with respect to the total weight of the polyester composition, the transition metal compounds being binary compounds of a transition metal element selected from titanium, vanadium, zirconium, niobium, hafnium, and tantalum, and a non-metallic element selected from boron, carbon, and nitrogen, wherein the beverage bottle preform reheats in the presence of infrared energy to a higher temperature in a given time than would a beverage bottle preform having no such particles present, and

wherein the beverage bottle preform has a b* value from minus 0.8 to plus 2.5, and a preform L* value of 70 or more, with the provisos that said one transition metal compound is not titanium nitride or titanium carbide.

26. A process for producing a polyester composition, comprising:

an esterification step comprising transesterifying a dicarboxylic acid diester with a diol, or directly esterifying a dicarboxylic acid with a diol, to obtain one or more of a polyester monomer or a polyester oligomer;
a polycondensation step comprising reacting the one or more of a polyester monomer or a polyester oligomer in a polycondensation reaction in the presence of a polycondensation catalyst to produce a polyester polymer having an It.V. from 0.50 dL/g to 1.1 dL/g;
a particulation step in which the molten polyester polymer is solidified into particles;
an optional solid-stating step in which the solid polymer is polymerized to an It.V. from 0.70 dL/g to 1.2 dL/g; and
a particle addition step comprising adding and dispensing particles of one or more transition metal compounds in the polymer In an amount from 0.5 ppm, to 1,000 ppm with respect to the total weight of the polyester composition, the transition metal compounds being binary compounds of a transition metal element selected from titanium, vanadium, zirconium, niobium, hafnium, and tantalum, and a non-metallic element selected from boron, carbon, and nitrogen, wherein the particle addition step occurs before, during, or after any of the preceding steps, with the provisos that said one transition metal compound is not titanium nitride or titanium carbide.

27. A process for producing a polyester composition, comprising:

an esterification step comprising transesterifying a dicarboxylic acid diester with a diol, or directly esterifying a dicarboxylic acid with a diol, to obtain one or more of a polyester monomer or a polyester oligomer;
a polycondensation step comprsing reacting the one or more of a polyester monomer or a polyester oligomer in a polycondensation reaction in the presence of a polycondensation catalyst to produce a polyester polymer having an It.V. from 0.50 dL/g to 1.1 dL/g;
a particulation step in which the molten polyester polymer is solidified into particles;
an optional solid-stating step in which the solid polymer is polymerized to an It.V. from 0.70 dL/g to 1.2 dL/g; and
a particle addition step comprising adding an dispersing particles of one or more transition metal compounds in the polymer in an amount from 0.5 ppm to 1,000 ppm with respect to the total weight of the polyester composition, the transition metal compounds being binary compounds of a transition metal element selected from titanium, vanadium, zirconium, niobium, hafnium, and tantalum, and a non-metallic element selected from boron, carbon, and nitrogen, wherein the particles addition step occurs before, during, or after any of the preceding steps, and wherein the particles of the one or more transition metal compounds are added and dispersed in the polymer in a liquid or solid carrier.

28. The process according to claim 26 wherein the particles of the one or more transition metal compounds are added and dispersed in the polymer in a liquid or solid carrier.

29. The process according to claim 27 or 28, wherein the particles of the one or more transition metal compounds are added and dispersed in the polymer in a carrier comprising one or more of: a fatty acid ester, an ethoxylated fatty acid ester, a paraffin oil, a paraffin wax, a carnauba wax, a polyvalent alcohol, a polyvalent amine, a silicone oil, a hydrogenated castor oil, a hydrogenated ricinus oil, a stearic ester of pentaerythritol, a soybean oil, or an ethoxylated alcohol.

30. The process according to claim 26, wherein the process further comprises a forming step, following the solid-stating step, the forming step comprising melting and extruding the resulting solid polymer to obtain a formed item having the particles of the one or more transition metal compounds dispersed therein.

31. The process according to claim 30, wherein the particles addition step occurs during or after the solid-stating step and prior to the forming step.

32. The process according to claim 26, wherein the particle addition step comprises adding the particles of the one or more transition metal compounds as a thermoplastic concentrate prior to or during the forming step, the thermoplastic concentrate comprising the particles in an amount from 100 ppm to 5,000 ppm, with respect to the weight of the thermoplastic concentrate.

33. The process according to claim 26, wherein the particle addition step is carried out prior to or during the polycondensation step.

34. The process according to claim 26, wherein the particle addition step is carried out prior to or during the particulation step.

35. The process according to claim 26, wherein the particle addition step is carried out prior to or during the solid-stating step.

36. The process according to claim 30, wherein the particle addition step is carried out prior to or during the forming step.

37. The process according to claim 36, wherein the particles of the one or more transition metal compounds are added and dispersed in the polymer in a liquid or solid carrier.

38. The process according to claim 36, wherein the particles of the one or more transition metal compounds are added and dispersed in the polymer in a carrier comprising one or more of: a fatty acid ester, an ethoxylated fatty acid ester, a paraffin oil, a paraffin wax, a carnauba wax, a polyvalent alcohol, a polyvalent amine, a silicone oil, a hydrogenated castor oil, a hydrogenated ricinus oil, a stearic ester of pentaerythritol, a soybean oil, or an ethoxylated alcohol.

39. The process according to claim 27, wherein the dicaboxylic acid comprises terephthalic acid.

40. The process according to claim 27, wherein the dicaboxylic acid diester comprises dimethyl terephthalate.

41. The process according to claim 27, wherein the diol comprises ethylene glycol.

42. The process according to claim 27, wherein the dicarboxylic acid comprises naphthalene dicarboxylic acid.

43. The process according to claim 27, wherein the dicarboxylic acid comprises an aromatic dicarboxylic acid.

44. The process according to claim 32, wherein the thermoplastic concentrate comprises:

    particles of one or more transition metal compounds, in an amount ranging from 0.15 wt.% up to 35 wt.% based on the weight of the thermoplastic concentrate; and
    a thermoplastic polymer, in an amount of at least 65 wt.% based on the weight of the thermoplastic concentrate.

45. The process according to claim 44, wherein the thermoplastic polymer comprises one or more of: a polyester, a polyolefin, or a polycarbonate.

46. A process for making a polyester preform comprising feeding a molten or solid bulk polyester and a liquid, molten or solid polyester concentrate composition to a machine for manufacturing the preform the concentrate composition comprising particles of one or more transition metal compounds that are binary compounds of a transition metal element selected from titanium, vanadium, zirconium, niobium, hafnium, and tantalum, and a non-metallic element selected from boron, carbon, and nitrogen, to obtain a preform having from 5 ppm to 500 ppm of the particles, based on the weight of the polyester preform, with the provisos that said one transition metal compound is not titanium nitride or titanium carbide.

47. The process of claim 46, wherein the particles are present in the concentrate composition in an amount of at least 0.15 wt.%

48. The process of claim 47, wherein the concentrate polyester polymer comprises the same residues as the bulk polyester polymer.

49. The process of claim 46, wherein the bulk polyester and the polyester concentrate are fed to the machine in separate streams.

**50.** The process of claim 46, wherein the concentrate polyester comprises post-consumer-recycle polyester.

**51.** A process for producing a polyester composition, comprising adding a concentrate polyester composition to a melt phase process for the manufacture of virgin polyester polymers, said concentrate comprising particles of one or more transition metal compounds that a re binary compounds of a transition metal element selected from titanium, vanadium, zirconium, niobium, hafnium, and tantalum, and a non-metallic element selected from boron, carbon, and nitrogen, to obtain a polyester composition having from 1 ppm to 100 ppm of the particles, based on the weight of the polyester composition, with the provisos that said one transition metal compound is not titanium nitride or titanium carbide.

**52.** The process of claim 51, wherein the polyester concentrate is added to the melt phase when the melt phase has an It.V. which is within +/- 0.2 lt.V. units of the It.V. of the polyester concentrate.

**53.** A process for making a polyester preform, comprising feeding a molten or solid bulk polyester and a carrier mixture to a machine for manufacturing the preform, the carrier mixture comprising a carrier and particles of one or more transition metal compounds that are binary compounds of a transition metal element selected from titanium, vanadium, zirconium, niobium, hafnium, and tantalum, and a non-metallic element selected from boron, carbon, and nitrogen, to obtain a preform having from 5 ppm to 500 ppm of the particles, based on the weight of the polyester preform, with the provisos that said one transition metal compound is not titanium nitride or titanium carbide, and said particles are not titanium nitride particles comprising titanium carbide.

**54.** A process for making a polyester preform, comprising feeding a molten or solid bulk polyester and a carrier mixture to a machine for manufacturing the preform, the carrier mixture comprising a carrier and particles of one or more transition metal compounds that are binary compounds of a transition metal element selected from titanium, vanadium, zirconium, niobium, hafnium, and tantalum, and a non-metallic element selected from boron, carbon, and nitrogen, to obtain a preform having from 5 ppm to 500 ppm of the particles, based on the weight of the polyester preform, said carrier comprising one or more of: a fatty acid ester, an ethoxylated fatty acid ester, a paraffin oil, a paraffin wax, a carnauba wax, a polyvalent alcohol, a polyvalent amine, a silicone oil, a hydrogenated castor oil, a hydrogenated ricinus oil, a stearic ester of pentaerythritol, a soybean oil, or an ethoxylated alcohol.

**55.** A process according to claim 53, wherein the carrier comprises one or more of: a fatty acid ester, an ethoxylated fatty acid ester, a paraffin oil, a paraffin wax, a carnauba wax, a polyvalent alcohol, a polyvalent amine, a silicone oil, a hydrogenated castor oil, a hydrogenated ricinus oil, a stearic ester of pentaerythritol, a soybean oil, or an ethoxylated alcohol.

**Patentansprüche**

**1.** Polyester-Zusammensetzung mit verbesserter Wiedererwärmung, umfassend:

ein Polyester-Polymer und
Teilchen einer oder mehrerer Übergangsmetallverbindungen, die in einer Menge von 0,5 ppm bis 1000 ppm bezüglich des Gesamtgewichts der Polyester-Zusammensetzung in dem Polyester-Polymer dispergiert sind, wobei die Übergangsmetallverbindungen binäre Verbindungen eines Übergangsmetallelements, das aus Titan, Vanadium, Zirconium, Niob, Hafnium und Tantal ausgewählt ist, und eines nicht-metallischen Elements sind, das aus Bor, Kohlenstoff und Stickstoff ausgewählt ist, mit den Maßgaben, dass die eine Übergangsmetallverbindung nicht Titannitrid oder Titancarbid ist.

**2.** Polyester-Zusammensetzung nach Anspruch 1, bei der die Teilchen der einen oder mehreren Übergangsmetallverbindungen in einer Menge von 1 ppm bis 750 ppm bezüglich des Gesamtgewichts der Polyester-Zusammensetzung vorliegen.

**3.** Polyester-Zusammensetzung nach Anspruch 1, bei der die Teilchen der einen oder mehreren Übergangsmetallverbindungen in einer Menge von 5 ppm bis 500 ppm bezüglich des Gesamtgewichts der Polyester-Zusammensetzung vorliegen.

**4.** Polyester-Zusammensetzung nach Anspruch 1, bei der die Teilchen der einen oder mehreren Übergangsmetallverbindungen in einer Menge von 5 ppm bis 250 ppm bezüglich des Gesamtgewichts der Polyester-Zusammensetzung vorliegen.

**5.** Polyester-Zusammensetzung nach Anspruch 1, bei der die Teilchen der einen oder mehreren Übergangsmetallverbindungen eine oder mehrere von: einem Vanadiumnitrid, einem Zirconiumnitrid, einem Tantalnitrid, einem Titanborid, einem Zirconiumborid oder einem Vanadiumcarbid umfassen.

**6.** Polyester-Zusammensetzung nach Anspruch 1, bei der die eine oder mehreren Übergangsmetallverbindungen ein Vanadiumnitrid umfassen.

**7.** Polyester-Zusammensetzung nach Anspruch 1, bei der die eine oder mehreren Übergangsmetallverbindungen ein Zirconiumnitrid umfassen.

**8.** Polyester-Zusammensetzung nach Anspruch 1, bei der die eine oder mehreren Übergangsmetallverbindungen ein Tantalnitrid umfassen.

**9.** Polyester-Zusammensetzung nach Anspruch 1, bei der die eine oder mehreren Übergangsmetallverbindungen ein Titanborid umfassen.

**10.** Polyester-Zusammensetzung nach Anspruch 1, bei der die eine oder mehreren Übergangsmetallverbindungen ein Zirconiumborid umfassen.

**11.** Polyester-Zusammensetzung nach Anspruch 1, bei der die eine oder mehreren Übergangsmetallverbindungen ein Vanadiumcarbid umfassen.

**12.** Polyester-Zusammensetzung nach Anspruch 1, bei der das Polyester-Polymer Polyethylenterephthalat umfasst.

**13.** Polyester-Zusammensetzung nach Anspruch 1, bei der die Polyester-Zusammensetzung in Form eines Getränkeflaschen-Vorformlings vorliegt.

**14.** Polyester-Zusammensetzung nach Anspruch 1, bei der die Polyester-Zusammensetzung in Form einer Getränkeflasche vorliegt.

**15.** Polyester-Zusammensetzung nach Anspruch 1, bei der die Polyester-Zusammensetzung in Form eines Formkörpers vorliegt.

**16.** Polyester-Zusammensetzung nach Anspruch 1, bei der das Polyester-Polymer eine kontinuierliche Phase umfasst, und bei der die Teilchen der einen oder mehreren Übergangsmetallverbindungen in der kontinuierlichen Phase dispergiert sind.

**17.** Polyester-Zusammensetzung nach Anspruch 1, bei der die Teilchen der einen der mehreren Übergangsmetallverbindungen in einer Menge von 5 ppm bis 500 ppm bezüglich des Gesamtgewichts der Polyester-Zusammensetzung vorliegen, und bei der die Teilchen eine Polyester-Zusammensetzung bereitstellen, die sich in Anwesenheit von Infrarotenergie auf eine höhere Temperatur in einer gegebenen Zeit erwärmt, als sie es in Abwesenheit derartiger Teilchen tun würde.

**18.** Polyester-Zusammensetzung nach Anspruch 1, bei der die Zusammensetzung in Form eines Getränkeflaschen-Vorformlings mit einem Vorformling-L*-Wert von 70 oder mehr und einem b*-Wert von -0,8 bis +2,5 vorliegt.

**19.** Polyester-Zusammensetzung nach Anspruch 1, bei der die Teilchen der einen oder mehreren Übergangsmetallverbindungen Teilchen umfassen, die mit der einen oder den mehreren Übergangsmetallverbindungen beschichtet sind.

**20.** Polyester-Zusammensetzung nach Anspruch 1, bei der die Teilchen der einen oder mehreren Übergangsmetallverbindungen hohle Kugeln der einen oder mehreren Übergangsmetallverbindungen umfassen.

**21.** Polyester-Zusammensetzung nach Anspruch 1, bei der die Teilchen der einen oder mehreren Übergangsmetallverbindungen die eine oder mehreren Übergangsmetallverbindungen in einer Menge von mindestens 90 Gew.-% bezüglich des Gesamtgewichts der Teilchen umfassen.

22. Polyester-Zusammensetzung nach Anspruch 15, bei der die Teilchen der einen oder mehreren Übergangsmetallverbindungen weiter eines oder mehrere der Übergangsmetalle in elementarer Form umfassen.

23. Polyester-Zusammensetzung nach Anspruch 1, bei der die Teilchen eine Teilchengrößen-Verteilung aufweisen, in der die Spanne (S) 0 bis 10 beträgt.

24. Polyester-Zusammensetzung nach Anspruch 1, bei der die Teilchen eine Teilchengrößen-Verteilung aufweisen, in der die Spanne (S) 0,01 bis 2 beträgt.

25. Getränkeflaschen-Vorformling mit verbesserter Wiedererwärmung, umfassend:

   ein Polyester-Polymer, in dem Poly(ethylenterephthalat)-Reste mindestens 90 Gew.-% des Polyester-Polymers umfassen; und
   Teilchen einer oder mehrerer Übergangsmetallverbindungen, die statistisch in einer Menge von 0,5 ppm bis 1000 ppm bezüglich des Gesamtgewichts der Polyester-Zusammensetzung in dem Polyester-Polymer dispergiert sind, wobei die Übergangsmetallverbindungen binäre Verbindungen eines Übergangsmetallelements, das aus Titan, Vanadium, Zirconium, Niob, Hafnium und Tantal ausgewählt ist, und eines nicht-metallischen Elements sind, das aus Bor, Kohlenstoff und Stickstoff ausgewählt ist,
   wobei der Getränkeflaschen-Vorformling sich in Anwesenheit von Infrarotenergie auf eine höhere Temperatur in einer gegebenen Zeit erwärmt, als dies ein Getränkeflaschen-Vorformling tun würde, in dem keine derartigen Teilchen vorliegen, und
   wobei der Getränkeflaschen-Vorformling einen b*-Wert von -0,8 bis +2,5 und einen Vorformling-L*-Wert von 70 oder mehr aufweist,
   mit den Maßgaben, dass die eine Übergangsmetallverbindung nicht Titannitrid oder Titancarbid ist.

26. Verfahren zur Herstellung einer Polyester-Zusammensetzung, umfassend:

   einen Veresterungsschritt, der die Umesterung eines Dicarbonsäurediesters mit einem Diol oder die direkte Veresterung einer Dicarbonsäure mit einem Diol umfasst, um eines oder mehrere aus einem Polyester-Monomer oder einem Polyester-Oligomer zu erhalten;
   einen Polykondensationsschritt, der die Umsetzung des einen oder der mehreren aus einem Polyester-Monomer oder einem Polyester-Oligomer in einer Polykondensationsreaktion in Anwesenheit eines Polykondensationskatalysators umfasst, um ein Polyester-Polymer mit einer Grenzviskosität von 0,50 dl/g bis 1,1 dl/g zu erzeugen;
   einen Teilchenbildungsschritt, in dem das geschmolzene Polyester-Polymer zu Teilchen verfestigt wird;
   einen fakultativen Festkörperpolymerisationsschritt, in dem das feste Polymer zu einer Grenzviskosität von 0,70 dl/g bis 1,2 dl/g polymerisiert wird; und
   einen Teilchenzugabeschritt, der die Zugabe und Dispergierung von Teilchen einer oder mehrerer Übergangsmetallverbindungen in dem Polymer in einer Menge von 0,5 ppm bis 1000 ppm bezüglich des Gesamtgewichts der Polyester-Zusammensetzung umfasst, wobei die Übergangsmetallverbindungen binäre Verbindungen eines Übergangsmetallelements, das aus Titan, Vanadium, Zirconium, Niob, Hafnium und Tantal ausgewählt ist, und eines nicht-metallischen Elements sind, das aus Bor, Kohlenstoff und Stickstoff ausgewählt ist, wobei der Teilchenzugabeschritt vor, während oder nach irgendeinem der vorangehenden Schritte stattfindet,
   mit den Maßgaben, dass die eine Übergangsmetallverbindung nicht Titannitrid oder Titancarbid ist.

27. Verfahren zur Herstellung einer Polyester-Zusammensetzung, umfassend:

   einen Veresterungsschritt, der die Umesterung eines Dicarbonsäurediesters mit einem Diol oder die direkte Veresterung einer Dicarbonsäure mit einem Diol umfasst, um eines oder mehrere aus einem Polyester-Monomer oder einem Polyester-Oligomer zu erhalten;
   einen Polykondensationsschritt, der die Umsetzung des einen oder der mehreren aus einem Polyester-Monomer oder einem Polyester-Oligomer in einer Polykondensationsreaktion in Anwesenheit eines Polykondensationskatalysators umfasst, um ein Polyester-Polymer mit einer Grenzviskosität von 0,50 dl/g bis 1,1 dl/g zu erzeugen;
   einen Teilchenbildungsschritt, in dem das geschmolzene Polyester-Polymer zu Teilchen verfestigt wird;
   einen fakultativen Festphasenpolymerisationsschritt, in dem das feste Polymer zu einer Grenzviskosität von 0,70 dl/g bis 1,2 dl/g polymerisiert wird; und
   einen Teilchenzugabeschritt, der die Zugabe und Dispergierung von Teilchen einer oder mehrerer Übergangsmetallverbindungen in dem Polymer in einer Menge von 0,5 ppm bis 1000 ppm bezüglich des Gesamtgewichts der Polyester-Zusammensetzung umfasst, wobei die Übergangsmetallverbindungen binäre Verbindungen eines Übergangsmetallelements, das aus Titan, Vanadium, Zirconium, Niob, Hafnium und Tantal ausgewählt ist, und eines nicht-metallischen Elements sind, das aus Bor, Kohlenstoff und Stickstoff ausgewählt ist, wobei der Teilchenzugabeschritt vor, während oder nach irgendeinem der vorangehenden Schritte durchgeführt wird, wobei die Teilchen der einen oder mehreren Übergangsmetallverbindungen in einem flüssigen oder festen Träger zugesetzt und in dem Polymer dispergiert werden.

28. Verfahren nach Anspruch 26, in dem die Teilchen der einen oder mehreren Übergangsmetallverbindungen in einem flüssigen oder festen Träger zugesetzt und in dem Polymer dispergiert werden.

29. Verfahren nach Anspruch 27 oder 28, bei dem die Teilchen der einen oder mehreren Übergangsmetallverbindungen in einem Träger zugesetzt und in dem Polymer dispergiert werden, welcher einen oder mehrere von: einem Fettsäureester, einem ethoxylierten Fettsäureester, einem Paraffinöl, einem Paraffinwachs, einem Carnaubawachs, einem mehrwertigen Alkohol, einem mehrwertigen Amin, einem Siliconöl, einem hydrierten Castoröl, einem hydrierten Rizinusöl, einem Stearinsäureester von Pentaerythrit, einem Sojabohnenöl oder einem ethoxylierten Alkohol umfasst.

30. Verfahren nach Anspruch 26, bei dem das Verfahren weiter nach dem Festphasenpolymerisationsschritt einen Formungsschritt umfasst, wobei der Formungsschritt das Schmelzen und Extrudieren des resultierenden festen Polymers zum Erhalt eines Formkörpers umfasst, in dem die Teilchen der einen oder mehreren Übergangsmetallverbindungen dispergiert sind.

31. Verfahren nach Anspruch 30, bei dem der Teilchenzugabeschritt während oder nach dem Festphasenpolymerisationsschritt und vor dem Formungsschritt stattfindet.

32. Verfahren nach Anspruch 26, bei dem der Teilchenzugabeschritt die Zugabe der Teilchen der einen oder mehreren Übergangsmetallverbindungen als thermoplastisches Konzentrat vor oder während des Formungsschritts umfasst, wobei das thermoplastische Konzentrat die Teilchen in einer Menge von 100 ppm bis 5.000 ppm bezüglich des Gewichts des thermoplastischen Konzentrats umfasst.

33. Verfahren nach Anspruch 26, bei dem der Teilchenzugabeschritt vor oder während des Polykondensationsschritts durchgeführt wird.

34. Verfahren nach Anspruch 26, bei dem der Teilchenzugabeschritt vor oder während des Teilchenbildungsschritts durchgeführt wird.

35. Verfahren nach Anspruch 26, bei dem der Teilchenzugabeschritt vor oder während des Festphasenpolymerisationsschritts durchgeführt wird.

36. Verfahren nach Anspruch 30, bei dem der Teilchenzugabeschritt vor oder während des Formungsschritts durchgeführt wird.

37. Verfahren nach Anspruch 36, bei dem die Teilchen der einen oder mehreren Übergangsmetallverbindungen in einem flüssigen oder festen Träger zugesetzt und in dem Polymer dispergiert werden.

38. Verfahren nach Anspruch 36, bei dem die Teilchen der einen oder mehreren Übergangsmetallverbindungen in einem Träger zugesetzt und in dem Polymer dispergiert werden, welcher einen oder mehrere von: einem Fettsäureester, einem ethoxylierten Fettsäureester, einem Paraffinöl, einem Paraffinwachs, einem Carnaubawachs, einem mehrwertigen Alkohol, einem mehrwertigen Amin, einem Siliconöl, einem hydrierten Castoröl, einem hydrierten Rizinusöl, einem Stearinsäureester von Pentaerythrit, einem Sojabohnenöl oder einem ethoxylierten Alkohol umfasst.

39. Verfahren nach Anspruch 27, bei dem die Dicarbonsäure Terephthalsäure umfasst.

40. Verfahren nach Anspruch 27, bei dem der Dicarbonsäureester Dimethylterephthalat umfasst.

41. Verfahren nach Anspruch 27, bei dem das Diol Ethlyenglycol umfasst.

42. Verfahren nach Anspruch 27, bei dem die Dicarbonsäure Naphthalindicarbonsäure umfasst.

**43.** Verfahren nach Anspruch 27, bei dem die Dicarbonsäure eine aromatische Dicarbonsäure umfasst.

**44.** Verfahren nach Anspruch 32, bei dem das thermoplastische Konzentrat umfasst:

Teilchen einer oder mehrerer Übergangsmetallverbindungen in einer Menge im Bereich von 0,15 Gew.-%bis 35 Gew.-%, bezogen auf das Gewicht des thermoplastischen Konzentrats; ein thermoplastisches Polymer in einer Menge von mindestens 65 Gew.-%, bezogen auf das Gewicht des thermoplastischen Konzentrats.

**45.** Verfahren nach Anspruch 44, bei dem das thermoplastische Polymer ein oder mehrere von: einem Polyester, einem Polyolefin oder einem Polycarbonat umfasst.

**46.** Verfahren zur Herstellung eines Polyester-Vorformlings, umfassend das Einspeisen eines geschmolzenen oder festen massiven Polyesters und einer flüssigen, geschmolzenen oder festen Polyesterkonzentrat-Zusammensetzung in eine Maschine zur Herstellung des Vorformlings, wobei die Konzentrat-Zusammensetzung Teilchen einer oder mehrerer Übergangsmetallverbindungen umfasst, die binäre Verbindungen eines Übergangsmetallelements, das aus Titan, Vanadium, Zirconium, Niob, Hafnium und Tantal ausgewählt ist, und eines nicht-metallischen Elements sind, das aus Bor, Kohlenstoff und Stickstoff ausgewählt ist, um einen Vorformling mit 5 ppm bis 500 ppm der Teilchen, bezogen auf das Gewicht des Polyester-Vorformlings, zu erhalten, mit den Maßgaben, dass die eine Übergangsmetallverbindung nicht Titannitrid oder Titancarbid ist.

**47.** Verfahren nach Anspruch 46, wobei die Teilchen in der Konzentrat-Zusammensetzung in einer Menge von mindestens 0,15 Gew.-% vorliegen.

**48.** Verfahren nach Anspruch 47, bei dem das Konzentrat-Polyester-Polymer die gleichen Reste wie das massive Polyester-Polymer umfasst.

**49.** Verfahren nach Anspruch 46, bei der der massive Polyester und das Polyester-Konzentrat in getrennten Strömen in die Maschine eingespeist werden.

**50.** Verfahren nach Anspruch 46, bei dem der Konzentrat-Polyester benutzten Recycle-Polyester umfasst.

**51.** Verfahren zur Herstellung einer Polyester-Zusammensetzung, umfassend die Zugabe einer Konzentrat-Polyester-Zusammensetzung zu einem Schmelzphasenprozess für die Herstellung eines jungfräulichen Polyester-Polymers, wobei das Konzentrat Teilchen einer oder mehrerer Übergangsmetallverbindungen umfasst, die binäre Verbindungen eines Übergangsmetallelements, das aus Titan, Vanadium, Zirconium, Niob, Hafnium und Tantal ausgewählt ist, und eines nicht-metallischen Elements sind, das aus Bor, Kohlenstoff und Stickstoff ausgewählt ist, um eine Polyester-Zusammensetzung mit ppm bis 100 ppm der Teilchen, bezogen auf das Gewicht der Polyester-Zusammensetzung, zu erhalten, mit den Maßgaben, dass die eine Übergangsmetallverbindung nicht Titannitrid oder Titancarbid ist.

**52.** Verfahren nach Anspruch 51, bei dem das Polyester-Konzentrat zu der Schmelzphase gegeben wird, wenn die Schmelzphase eine Grenzviskosität aufweist, die innerhalb von +/- 0,2 Grenzviskositätseinheiten der Grenzviskosität des Polyester-Konzentrats liegt.

**53.** Verfahren zur Herstellung eines Polyester-Vorformlings, umfassend das Einspeisen eines geschmolzenen oder festen massiven Polyesters und einer Trägermischung in eine Maschine zur Herstellung des Vorformlings, wobei die Trägermischung einen Träger und Teilchen einer oder mehrerer Übergangsmetallverbindungen umfasst, die binäre Verbindungen eines Übergangsmetallelements, das aus Titan, Vanadium, Zirconium, Niob, Hafnium und Tantal ausgewählt ist, und eines nicht-metallischen Elements sind, das aus Bor, Kohlenstoff und Stickstoff ausgewählt ist, um einen Vorformling mit 5 ppm bis 500 ppm der Teilchen, bezogen auf das Gewicht des Polyester-Vorformlings, zu erhalten, mit den Maßgaben, dass die eine Übergangsmetallverbindung nicht Titannitrid oder Titancarbid ist und die Teilchen nicht Titannitrid-Teilchen sind, die Titancarbid umfassen.

**54.** Verfahren zur Herstellung eines Polyester-Vorformlings, umfassend das Einspeisen eines geschmolzenen oder festen massiven Polyesters und einer Trägermischung in eine Maschine zur Herstellung des Vorformlings, wobei die Trägermischung einen Träger und Teilchen einer oder mehrerer Übergangsmetallverbindungen umfasst, die binäre Verbindungen eines Übergangsmetallelements, das aus Titan, Vanadium, Zirconium, Niob, Hafnium und Tantal ausgewählt ist, und eines nicht-metallischen Elements sind, das aus Bor, Kohlenstoff und Stickstoff ausgewählt ist, um einen Vorformling mit 5 ppm bis 500 ppm der Teilchen, bezogen auf das Gewicht des Polyester-Vorformlings, zu erhalten, wobei der Träger einen oder mehrere von: einem Fettsäureester, einem ethoxylierten Fettsäureester, einem Paraffinöl, einem Paraffinwachs, einem Carnaubawachs, einem mehrwertigen Alkohol, einem mehrwertigen Amin, einem Siliconöl, einem hydrierten Castoröl, einem hydrierten Rizinusöl, einem Stearinsäurerester von Pentaerythrit, einem Sojabohnenöl oder einem ethoxylierten Alkohol umfasst.

**55.** Verfahren nach Anspruch 53, bei dem der Träger einen oder mehrere von:

einem Fettsäureester, einem ethoxylierten Fettsäureester, einem Paraffinöl, einem Paraffinwachs, einem Carnaubawachs, einem mehrwertigen Alkohol,
einem mehrwertigen Amin, einem Siliconöl, einem hydrierten Castoröl, einem hydrierten Rizinusöl, einem Stearinsäurerester von Pentaerythrit, einem Sojabohnenöl oder einem ethoxylierten Alkohol umfasst.

## Revendications

**1.** Composition de polyester ayant une réchauffe améliorée, comprenant :

un polymère polyester ; et
des particules d'un ou plusieurs composés métalliques de transition, dispersées dans le polymère polyester dans une quantité de 0,5 ppm à 1 000 ppm par rapport au poids total de la composition de polyester, les composés métalliques de transition étant des composés binaires d'un élément métallique de transition choisi parmi le titane, le vanadium, le zirconium, le niobium, l'hafnium et le tantale, et d'un élément non métallique choisi parmi le bore, le carbone et l'azote, à condition que ledit un composé métallique de transition ne soit pas le nitrure de titane ou le carbure de titane.

**2.** Composition de polyester selon la revendication 1, dans laquelle les particules de l'un ou plusieurs composés métalliques de transition sont présentes dans une quantité de 1 ppm à 750 ppm par rapport au poids total de la composition de polyester.

**3.** Composition de polyester selon la revendication 1, dans laquelle les particules de l'un ou plusieurs composés métalliques de transition sont présentes dans une quantité de 5 ppm à 500 ppm par rapport au poids total de la composition de polyester.

**4.** Composition de polyester selon la revendication 1, dans laquelle les particules de l'un ou plusieurs composés métalliques de transition sont présentes dans une quantité de 5 ppm à 250 ppm par rapport au poids total de la composition de polyester.

**5.** Composition de polyester selon la revendication 1, dans laquelle les particules de l'un ou plusieurs composés métalliques de transition comprennent un ou plusieurs parmi : un nitrure de vanadium, un nitrure de zirconium, un nitrure de tantale, un borure de titane, un borure de zirconium ou un carbure de vanadium.

**6.** Composition de polyester selon la revendication 1, dans laquelle le un ou plusieurs composés métalliques de transition comprend un nitrure de vanadium.

**7.** Composition de polyester selon la revendication 1, dans laquelle le un ou plusieurs composés métalliques de transition comprend un nitrure de zirconium.

**8.** Composition de polyester selon la revendication 1, dans laquelle le un ou plusieurs composés métalliques de transition comprend un nitrure de tantale.

**9.** Composition de polyester selon la revendication 1, dans laquelle le un ou plusieurs composés métalliques de transition comprend un borure de titane.

**10.** Composition de polyester selon la revendication 1, dans laquelle le un ou plusieurs composés métalliques de transition comprend un borure de zirconium.

**11.** Composition de polyester selon la revendication 1, dans laquelle le un ou plusieurs composés métalliques de transition comprend un carbure de vanadium.

**12.** Composition de polyester selon la revendication 1, dans laquelle le polymère polyester comprend un téréphtalate de polyéthylène.

**13.** Composition de polyester selon la revendication 1, dans laquelle la composition de polyester est sous la forme d'une préforme de bouteille de boisson.

**14.** Composition de polyester selon la revendication 1, dans laquelle la composition de polyester est sous la forme d'une bouteille de boisson.

**15.** Composition de polyester selon la revendication 1, dans laquelle la composition de polyester est sous la forme d'un article moulé.

**16.** Composition de polyester selon la revendication 1, dans laquelle le polymère de polyester comprend une phase continue, et dans laquelle les particules de l'un ou plusieurs composés métalliques de transition sont dispersées au sein de la phase continue.

**17.** Composition de polyester selon la revendication 1, dans laquelle les particules de l'un ou plusieurs composés métalliques de transition sont présentes dans une quantité de 5 ppm à 500 ppm par rapport au poids total de la composition de polyester, et dans laquelle les particules fournissent une composition de polyester qui se réchauffe en présence d'énergie infrarouge à une température supérieure en un temps donné qu'elle le ferait en l'absence de telles particules.

**18.** Composition de polyester selon la revendication 1, dans laquelle la composition est sous la forme d'une préforme de bouteille de boisson ayant une valeur L* de préforme de 70 ou plus, et une valeur b* de moins 0,8 à plus 2,5.

**19.** Composition de polyester selon la revendication 1, dans laquelle les particules de l'un ou plusieurs composés métalliques de transition comprennent des particules enrobées avec le un ou plusieurs composés métalliques de transition.

**20.** Composition de polyester selon la revendication 1, dans laquelle les particules de l'un ou plusieurs composés métalliques de transition comprennent des sphères creuses de l'un ou plusieurs composés métalliques de transition.

**21.** Composition de polyester selon la revendication 1, dans laquelle les particules de l'un ou plusieurs composés métalliques de transition comprennent le un ou plusieurs composés métalliques de transition dans une quantité d'au moins 90 % en poids, par rapport au poids total des particules.

**22.** Composition de polyester selon la revendication 15, dans laquelle les particules de l'un ou plusieurs composés métalliques de transition comprennent en outre un ou plusieurs des éléments de transition sous forme élémentaire.

**23.** Composition de polyester selon la revendication 1, dans laquelle les particules ont une distribution granulométrique dans laquelle l'étendue (E) est de 0 à 10.

**24.** Composition de polyester selon la revendication 1, dans laquelle les particules ont une distribution granulométrique dans laquelle l'étendue (E) est de 0,01 à 2.

**25.** Préforme de bouteille de boisson ayant une réchauffe améliorée, comprenant :

un polymère polyester dans lequel les résidus poly(téréphtalate d'éthylène) comprennent au moins 90 % en poids du polymère polyester ; et
des particules d'un ou plusieurs composés métalliques de transition, dispersées de manière aléatoire dans le polymère polyester dans une quantité de 0,5 ppm à 1 000 ppm par rapport au poids total de la composition de polyester, les composés métalliques de transition étant des composés binaires d'un élément métallique de transition choisi parmi le titane, le vanadium, le zirconium, le niobium, l'hafnium et le tantale, et un élément non métallique choisi parmi le bore, le carbone et l'azote,
dans laquelle la préforme de bouteille de boisson se réchauffe en présence d'énergie infrarouge à une température supérieure en un temps donné que le ferait une préforme de bouteille de boisson n'ayant pas de telles particules présentes, et

dans laquelle la préforme de bouteille de boisson a une valeur b* de moins 0,8 à plus 2,5, et une valeur L* de préforme de 70 ou plus, à condition que ledit un composé métallique de transition ne soit pas le nitrure de titane ou le carbure de titane.

26. Procédé pour produire une composition de polyester, comprenant :

une étape d'estérification comprenant la transestérification d'un diester d'acide dicarboxylique avec un diol, ou l'estérification directe d'un acide dicarboxylique avec un diol, pour obtenir un ou plusieurs parmi un monomère polyester ou un oligomère polyester ;

une étape de polycondensation comprenant la réaction de l'un ou plusieurs parmi un monomère polyester ou un oligomère polyester dans une réaction de polycondensation en présence d'un catalyseur de polycondensation pour produire un polymère polyester ayant une V.It. de 0,50 dl/g à 1,1 dl/g ;

une étape de formation de particules dans laquelle le polymère polyester fondu est solidifié en particules ;

une étape de passage à l'état solide facultative dans laquelle le polymère solide est polymérisé à une V.It. de 0,70 dl/g à 1,2 dl/g ; et

une étape d'ajout de particules comprenant l'ajout et la dispersion des particules d'un ou plusieurs composés métalliques de transition dans le polymère dans une quantité de 0,5 ppm à 1 000 ppm par rapport au poids total de la composition de polyester, les composés métalliques de transition étant des composés binaires d'un élément métallique de transition choisi parmi le titane, le vanadium, le zirconium, le niobium, l'hafnium et le tantale, et d'un élément non métallique choisi parmi le bore, le carbone et l'azote, dans laquelle l'étape d'ajout des particules a lieu avant, pendant ou après l'une quelconque des étapes précédentes,

à condition que ledit un composé métallique de transition ne soit pas le nitrure de titane ou le carbure de titane.

27. Procédé pour produire une composition de polyester, comprenant :

une étape d'estérification comprenant la transestérification d'un diester d'acide dicarboxylique avec un diol, ou l'estérification directe d'un acide dicarboxylique avec un diol, pour obtenir un ou plusieurs parmi un monomère polyester ou un oligomère polyester ;

une étape de polycondensation comprenant la réaction de l'un ou plusieurs parmi un monomère polyester ou un oligomère polyester dans une réaction de polycondensation en présence d'un catalyseur de polycondensation pour produire un polymère polyester ayant une V.It. de 0,50 dl/g à 1,1 dl/g ;

une étape de formation de particules dans laquelle le polymère polyester fondu est solidifié en particules ;

une étape de passage à l'état solide facultative dans laquelle le polymère solide est polymérisé à une V.It. de 0,70 dl/g à 1,2 dl/g ; et

une étape d'ajout de particules comprenant l'ajout et la dispersion des particules d'un ou plusieurs composés métalliques de transition dans le polymère dans une quantité de 0,5 ppm à 1 000 ppm par rapport au poids total de la composition de polyester, les composés métalliques de transition étant des composés binaires d'un élément métallique de transition choisi parmi le titane, le vanadium, le zirconium, le niobium, l'hafnium et le tantale, et d'un élément non métallique choisi parmi le bore, le carbone et l'azote, dans laquelle l'étape d'ajout des particules a lieu avant, pendant ou après l'une quelconque des étapes précédentes, et dans laquelle les particules de l'un ou plusieurs composés métalliques de transition sont ajoutées et dispersées dans le polymère dans un support liquide ou solide.

28. Procédé selon la revendication 26, dans lequel les particules de l'un ou plusieurs composés métalliques de transition sont ajoutées et dispersées dans le polymère dans un support liquide ou solide.

29. Procédé selon la revendication 27 ou 28, dans lequel les particules de l'un ou plusieurs composés métalliques de transition sont ajoutées et dispersées dans le polymère dans un support comprenant un ou plusieurs parmi : un ester d'acide gras, un ester d'acide gras éthoxylé, une huile de paraffine, une cire de paraffine, une cire de carnauba, un alcool polyvalent, une amine polyvalente, une huile de silicone, une huile de ricin hydrogénée, une huile de ricinus hydrogénée, un ester stéarique de pentaérythritol, une huile de soja ou un alcool éthoxylé.

30. Procédé selon la revendication 26, dans lequel le procédé comprend en outre une étape de mise en forme, après l'étape de passage à l'état solide, l'étape de mise en forme comprenant la fusion et l'extrusion du polymère solide résultant pour obtenir un article formé ayant les particules de l'un ou plusieurs composés métalliques de transition dispersées dedans.

**31.** Procédé selon la revendication 30, dans lequel l'étape d'ajout des particules a lieu pendant ou après l'étape de passage à l'état solide et avant l'étape de mise en forme.

**32.** Procédé selon la revendication 26, dans lequel l'étape d'ajout des particules comprend l'ajout des particules de l'un ou plusieurs composés métalliques de transition sous forme d'un concentré thermoplastique avant ou pendant l'étape de mise en forme, le concentré thermoplastique comprenant les particules dans une quantité de 100 ppm à 5 000 ppm, par rapport au poids du concentré thermoplastique.

**33.** Procédé selon la revendication 26, dans lequel l'étape d'ajout des particules est réalisée avant ou pendant l'étape de polycondensation.

**34.** Procédé selon la revendication 26, dans lequel l'étape d'ajout des particules est réalisée avant ou pendant l'étape de formation des particules.

**35.** Procédé selon la revendication 26, dans lequel l'étape d'ajout des particules est réalisée avant ou pendant l'étape de passage à l'état solide.

**36.** Procédé selon la revendication 30, dans lequel l'étape d'ajout des particules est réalisée avant ou pendant l'étape de mise en forme.

**37.** Procédé selon la revendication 36, dans lequel les particules de l'un ou plusieurs composés métalliques de transition sont ajoutées et dispersées dans le polymère dans un support liquide ou solide.

**38.** Procédé selon la revendication 36, dans lequel les particules de l'un ou plusieurs composés métalliques de transition sont ajoutées et dispersées dans le polymère dans un support comprenant un ou plusieurs parmi : un ester d'acide gras, un ester d'acide gras éthoxylé, une huile de paraffine, une cire de paraffine, une cire de carnauba, un alcool polyvalent, une amine polyvalente, une huile de silicone, une huile de ricin hydrogénée, une huile de ricinus hydrogénée, un ester stéarique de pentaérythritol, une huile de soja ou un alcool éthoxylé.

**39.** Procédé selon la revendication 27, dans lequel l'acide dicarboxylique comprend l'acide téréphtalique.

**40.** Procédé selon la revendication 27, dans lequel le diester d'acide dicarboxylique comprend le téréphtalate de diméthyle.

**41.** Procédé selon la revendication 27, dans lequel le diol comprend l'éthylène glycol.

**42.** Procédé selon la revendication 27, dans lequel l'acide dicarboxylique comprend l'acide naphtalène dicarboxylique.

**43.** Procédé selon la revendication 27, dans lequel l'acide dicarboxylique comprend un acide dicarboxylique aromatique.

**44.** Procédé selon la revendication 32, dans lequel le concentré thermoplastique comprend :

des particules d'un ou plusieurs composés métalliques de transition, dans une quantité allant de 0,15 % en poids à 35 % en poids sur la base du poids du concentré thermoplastique ; et
un polymère thermoplastique, dans une quantité d'au moins 65 % en poids sur la base du poids du concentré thermoplastique.

**45.** Procédé selon la revendication 44, dans lequel le polymère thermoplastique comprend un ou plusieurs parmi : un polyester, une polyoléfine ou un polycarbonate.

**46.** Procédé pour fabriquer une préforme en polyester, comprenant l'alimentation d'un polyester vrac fondu ou solide et d'une composition concentrée de polyester liquide, fondue ou solide vers une machine pour fabriquer la préforme, la composition concentrée comprenant des particules d'un ou plusieurs composés métalliques de transition qui sont des composés binaires d'un élément métallique de transition choisi parmi le titane, le vanadium, le zirconium, le niobium, l'hafnium et le tantale, et d'un élément non métallique choisi parmi le bore, le carbone et l'azote, pour obtenir une préforme ayant de 5 ppm à 500 ppm des particules, sur la base du poids de la préforme de polyester, à condition que ledit un composé métallique de transition ne soit pas le nitrure de titane ou le carbure de titane.

**47.** Procédé selon la revendication 46, dans lequel les particules sont présentes dans la composition concentrée dans une quantité d'au moins 0,15 % en poids.

**48.** Procédé selon la revendication 47, dans lequel le polymère polyester concentré comprend les mêmes résidus que le polymère polyester vrac.

**49.** Procédé selon la revendication 46, dans lequel le polyester vrac et le concentré de polyester sont alimentés vers la machine dans des courants distincts.

**50.** Procédé selon la revendication 46, dans lequel le polyester concentré comprend un polyester recyclé après consommation.

**51.** Procédé pour produire une composition de polyester, comprenant l'ajout d'une composition de polyester concentré à un procédé en phase fondue pour la fabrication de polymères polyesters vierges, ledit concentré comprenant des particules d'un ou plusieurs composés métalliques de transition qui sont des composés binaires d'un élément métallique de transition choisi parmi le titane, le vanadium, le zirconium, le niobium, l'hafnium et le tantale, et d'un élément non métallique choisi parmi le bore, le carbone et l'azote, pour obtenir une composition de polyester ayant de 1 ppm à 100 ppm des particules, sur la base du poids de la composition de polyester, à condition que ledit un composé métallique de transition ne soit pas le nitrure de titane ou le carbure de titane.

**52.** Procédé selon la revendication 51, dans lequel le concentré de polyester est ajouté à la phase fondue lorsque la phase fondue a une V.lt. qui est dans +/-0,2 unité de V.lt. de la V.lt. du concentré de polyester.

**53.** Procédé pour fabriquer une préforme de polyester, comprenant l'alimentation d'un polyester vrac fondu ou solide et d'un mélange support vers une machine pour fabriquer la préforme, le mélange support comprenant un support et des particules d'un ou plusieurs composés métalliques de transition qui sont des composés binaires d'un élément métallique de transition choisi parmi le titane, le vanadium, le zirconium, le niobium, l'hafnium et le tantale, et d'un élément non métallique choisi parmi le bore, le carbone et l'azote, pour obtenir une préforme ayant de 5 ppm à 500 ppm des particules, sur la base du poids de la préforme de polyester, à condition que ledit un composé métallique de transition ne soit pas le nitrure de titane ou le carbure de titane, et que lesdites particules ne soient pas des particules de nitrure de titane comprenant le carbure de titane.

**54.** Procédé pour fabriquer une préforme de polyester, comprenant l'alimentation d'un polyester vrac fondu ou solide et d'un mélange support vers une machine pour fabriquer la préforme, le mélange support comprenant un support et des particules d'un ou plusieurs composés métalliques de transition qui sont des composés binaires d'un élément métallique de transition choisi parmi le titane, le vanadium, le zirconium, le niobium, l'hafnium et le tantale, et d'un élément non métallique choisi parmi le bore, le carbone et l'azote, pour obtenir une préforme ayant de 5 ppm à 500 ppm des particules, sur la base du poids de la préforme de polyester, ledit support comprenant un ou plusieurs parmi : un ester d'acide gras, un ester d'acide gras éthoxylé, une huile de paraffine, une cire de paraffine, une cire de carnauba, un alcool polyvalent, une amine polyvalente, une huile de silicone, une huile de ricin hydrogénée, une huile de ricinus hydrogénée, un ester stéarique de pentaérythritol, une huile de soja ou un alcool éthoxylé.

**55.** Procédé selon la revendication 53, dans lequel le support comprend un ou plusieurs parmi : un ester d'acide gras, un ester d'acide gras éthoxylé, une huile de paraffine, une cire de paraffine, une cire de carnauba, un alcool polyvalent, une amine polyvalente, une huile de silicone, une huile de ricin hydrogénée, une huile de ricinus hydrogénée, un ester stéarique de pentaérythritol, une huile de soja ou un alcool éthoxylé.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3733309 A
- WO 2007064312 A
- WO 2006055198 A
- EP 1431337 A1
- WO 0146306 A1
- WO 199603163 A1
- WO 199502504 A
- US 6197851 B
- US 4617374 A

### Non-patent literature cited in the description

- **L. E. Toth.** Transition Metal Carbide and Nitrides. Academic Press, 1971, 1-28
- Kirk-Othmer Encyclopedia of Chemical Technology. 1996, vol. 17, 108-127
- Kirk-Othmer Encyclopedia of Chemical Technology. 1992, vol. 4, 841-848
- Kirk-Othmer Encyclopedia of Chemical Technology. 1997, vol. 4, 423-430
- Kirk-Othmer Encyclopedia of Chemical Technology. 1997, vol. 24, 225-231
- Kirk-Othmer Encyclopedia of Chemical Technology. 1997, vol. 24, 801
- Kirk-Othmer Encyclopedia of Chemical Technology. 1998, vol. 25, 872-873
- Kirk-Othmer Encyclopedia of Chemical Technology. 1997, vol. 23, 676
- Kirk-Othmer Encyclopedia of Chemical Technology. 1997, vol. 24, 186-224
- **L.E. Toth.** Transition Metal Carbides and Nitrides. Academic Press, 1971, 12
- Kirk-Othmer Encyclopedia of Chemical Technology. 1992, vol. 4, 426
- Kirk-Othmer Encyclopedia of Chemical Technology. 1997, vol. 22, 256-278
- **Fred W. Billmeyer, Jr.** Principles of Color Technology. John Wiley & Sons, 1981, 25-66